# FASCICULE DE BREVET EUROPEEN

(11) **EP 3 280 563 B1**
(45) Date de publication et mention de la délivrance du brevet: **31.01.2024**
(21) Numéro de dépôt: 16730869.1
(22) Date de dépôt: 06.04.2016
(51) Int. Cl.: B23P 11/00, H02K 5/04, F16D 1/08, B62D 5/04

(54) **PROCÉDÉ D'ASSEMBLAGE PERMETTANT DE FIXER UNE PREMIÈRE PIÈCE À UNE SECONDE PIÈCE**
VERFAHREN ZUM VERBINDEN EINES ERSTEN TEILS MIT EINEM ZWEITEN TEIL
ASSEMBLY METHOD FOR ATTACHING A FIRST PART TO A SECOND PART

(30) Priorité: 08.04.2015 FR 1553012
(43) Date de publication de la demande: 14.02.2018
(73) Titulaire: JTEKT Europe, 69540 Irigny (FR)
(72) Inventeur: BROCHOT, Patrice, 69600 Oullins (FR); STEPHANUS, Julien, 69007 Lyon (FR)
(74) Mandataire: Germain Maureau
(86) Numéro de dépôt international: PCT/FR2016/050785
(87) Numéro de publication internationale: WO 2016/162633

(56) Documents cités:
- EP-A1- 0 569 269
- EP-A2- 1 863 149
- EP-A2- 2 135 796
- DE-A1-102007 003 456
- DE-A1-102009 027 872
- DE-A1-102010 003 354
- US-A1- 2013 302 152

## Description

La présente invention concerne les procédés d'assemblage, de type frettage, qui utilisent la déformation forcée, à la fois plastique et élastique, d'une pièce à l'encontre d'une autre pièce pour créer un assemblage serré.

La présente invention se rapporte plus particulièrement à un procédé d'assemblage utilisable dans le domaine automobile, et plus spécifiquement dans la fabrication de dispositifs de direction assistée.

A ce titre, l'invention concerne plus spécifiquement l'assemblage d'un moteur d'assistance de direction dans un carter de direction.

Au sein d'un dispositif de direction assistée, il est nécessaire de fixer le moteur d'assistance, généralement un moteur électrique, dans un carter de direction qui est généralement réalisé dans un alliage léger, de type alliage d'aluminium ou alliage de magnésium.

Usuellement, le moteur d'assistance présente quant à lui une enveloppe externe en acier, de forme globalement cylindrique. Ladite enveloppe externe peut être formée par exemple par un boîtier en acier rapporté sur le stator du moteur, ou bien encore, plus communément, par un empilement de tôles statoriques, c'est-à-dire un ensemble de disques en acier de fine épaisseur qui sont empilés coaxialement les uns sur les autres suivant la direction de l'axe de rotation de l'arbre moteur, de sorte à former un stator feuilleté.

Or, l'opération d'assemblage du moteur d'assistance sur le carter de direction doit surmonter deux difficultés majeures.

La première difficulté tient au fait que les tolérances dimensionnelles de fabrication sur le diamètre extérieur de l'enveloppe du moteur sont relativement grandes, si bien qu'il est difficile, sinon impossible, d'obtenir un ajustement, et donc une contrainte de serrage, parfaitement prévisible et reproductible d'un assemblage à l'autre.

La seconde difficulté tient au fait que le matériau constitutif de l'enveloppe du moteur, typiquement un acier, et le matériau constitutif du carter de direction, typiquement un alliage d'aluminium, possèdent des coefficients de dilatation thermique très différents. Or, le dispositif de direction est susceptible d'être exposé à des températures de fonctionnement qui varient dans une plage relativement étendue, typiquement de -40°C à +120°C, de telle sorte que l'assemblage est soumis à des phénomènes de dilatation différentielle qui peuvent induire, selon le cas, soit un relâchement du serrage, de nature à fragiliser l'assemblage, soit au contraire un accroissement des contraintes internes, de nature à provoquer un endommagement voire une rupture des pièces, par exemple par fissuration.

Au regard de ces difficultés, différentes solutions d'assemblage ont été envisagées.

Une première solution connue consiste à fretter à chaud le moteur (l'enveloppe du moteur) directement dans le carter en alliage d'aluminium. Les variations dimensionnelles induites par le chauffage, et plus particulièrement la dilatation du carter, lors de l'assemblage, au moment d'introduire le moteur dans ledit carter, permettent en effet de rattraper les écarts dimensionnels liés aux tolérances de fabrication, et ainsi de garantir *in fine,* après refroidissement, le serrage effectif d'une pièce sur l'autre.

Toutefois, l'assemblage ainsi obtenu par frettage à chaud tend à générer des contraintes résiduelles élevées dans le carter.

C'est pourquoi, afin d'éviter une rupture sous contrainte du carter, il est nécessaire d'appairer les moteurs avec les carters, et/ou d'utiliser un alliage d'aluminium spécifique, qui présente une résistance mécanique à la rupture particulièrement élevée.

Cette première solution d'assemblage est donc particulièrement coûteuse et parfois fastidieuse à mettre en oeuvre.

Une seconde solution connue consiste à interposer, entre le moteur et le carter, lors d'une opération de montage sous presse, une bague dite « bague de tolérance », qui se présente sous la forme d'un anneau fendu dont la surface dessine une succession de formes ondulées.

Grâce à l'élasticité radiale que lesdites formes ondulées confèrent à la bague de tolérance, ladite bague se retrouve pincée en compression radiale entre le moteur et le carter, de sorte à rattraper le jeu entre le moteur et le carter et à assurer, par friction, un lien entre ces deux pièces.

Si cette seconde solution est plus économique que la première, elle n'est cependant pas exempte d'inconvénients.

Ainsi, un premier inconvénient de cette seconde solution est que les bagues de tolérances, et plus particulièrement l'amplitude de leurs formes ondulées, doivent être dimensionnées de manière à créer une interférence importante de la bague avec le moteur et avec le carter, et ce afin que l'assemblage puisse rester solide, sans se relâcher, sur toute la plage de températures de fonctionnement déjà mentionnée plus haut.

En raison de cette forte interférence, les formes ondulées peuvent notamment provoquer, lors de l'insertion en force du moteur et de la bague dans le carter, une abrasion du carter, et ainsi générer des copeaux métalliques qui créent un risque de court-circuit au niveau du moteur ou de sa commande électronique.

En outre, les fortes pressions exercées localement par les formes ondulées sur le carter peuvent provoquer localement une déformation plastique, voire une fissuration dudit carter.

Ensuite, un autre inconvénient de l'utilisation de bagues de tolérance tient au fait que la structure des bagues de tolérance est complexe et sujette à des variations dimensionnelles d'une bague à l'autre, si bien qu'il est difficile d'effectuer un contrôle métrologique des bagues, et *a fortiori* de garantir la reproductibilité et l'homogénéité des assemblages, ce qui peut constituer une gêne dans une fabrication en grande série.

DE102007009456 divulgue un système de direction assistée pour un véhicule, en particulier un système de direction assistée électrique pour un véhicule.

JP2013148134 divulgue le préambule de la revendication 1, notamment un procédé d'assemblage permettant de fixer un écrou de vis à billes à un roulement à billes via un élément de montage. L'élément de montage comprend un premier tronçon, un deuxième tronçon, et une partie de connexion qui relie le premier tronçon et le deuxième tronçon.

Les objets assignés à l'invention visent par conséquent à remédier aux inconvénients susmentionnés et à proposer un nouveau procédé d'assemblage pour assembler en force des pièces l'une sur l'autre par serrage, ledit procédé devant permettre d'obtenir un serrage homogène et efficace, assurant une fixation solide mais néanmoins pas trop contraignante pour les pièces, ledit procédé étant de surcroît simple, rapide et peu onéreux à mettre en oeuvre.

Les objets assignés à l'invention sont atteints au moyen d'un procédé d'assemblage permettant de fixer une première pièce à une seconde pièce, au cours duquel :
- on interpose entre la première pièce et la seconde pièce une bague d'assemblage cylindrique, d'axe central (XX'), qui présente une face radialement interne et une face radialement externe,
- on engage de force la face radialement interne de la bague d'assemblage sur la première pièce, de manière à créer entre la première pièce et la bague un contact de serrage dit « premier contact de serrage » qui solidarise la première pièce et la bague, ledit premier contact de serrage occupant, sur la surface radialement interne de la bague, une surface de contact totale dite « première zone d'interférence »,

- et on engage de force la face radialement externe de la bague d'assemblage sur la seconde pièce, de manière à créer entre la seconde pièce et la bague un contact de serrage dit « second contact de serrage » qui solidarise la seconde pièce et la bague, ledit second contact de serrage occupant, sur la surface radialement externe de la bague, une surface de contact totale dite « seconde zone d'interférence »,
procédé dans lequel on utilise une bague d'assemblage qui comporte un premier tronçon de bague cylindrique et un second tronçon de bague cylindrique qui sont étagés axialement l'un par rapport à l'autre, le long de l'axe central (XX'), et qui présentent des dimensions différentes l'un de l'autre, en section normale à l'axe central (XX'), de manière à confiner la première zone d'interférence dans le premier tronçon de bague et, respectivement, la seconde zone d'interférence dans le second tronçon de bague, si bien que la première zone d'interférence et la seconde zone d'interférence ne présentent axialement pas de chevauchement l'une avec l'autre ledit procédé étant caractérisé en ce que, au moins avant l'engagement de la bague d'assemblage sur la première pièce, la face radialement interne du premier tronçon de bague, destinée à recevoir la première pièce, présente une forme sensiblement tronconique qui converge vers l'axe central dans la direction opposée au second tronçon de bague, selon un angle dit « angle de fermeture » qui est de préférence sensiblement compris entre 0,5 degré et 2 degrés, voire 4 degrés, et qui est préférentiellement sensiblement égal à 1 degré.

Des modes de réalisation préférés du procédé sont décrits dans les revendications dépendantes.

Avantageusement, grâce à un agencement approprié de la bague d'assemblage par rapport aux première et seconde pièces à assembler, le procédé conforme à l'invention permet de dissocier l'une de l'autre les zones fonctionnelles de la bague d'assemblage, c'est-à-dire les première et seconde zones d'interférence au niveau desquelles la bague entre en contact avec, et interagit par compression radiale avec, la première pièce et la seconde pièce respectivement.

A cet effet, l'invention prévoit de créer au sein de la bague d'une part un premier tronçon de bague, qui est destiné à recevoir la première pièce et qui est agencé pour accueillir (et contenir entièrement) la première zone d'interférence, et d'autre part un second tronçon de bague, qui est destiné à recevoir la seconde pièce et qui est agencé pour accueillir (et contenir entièrement) la seconde zone d'interférence, ledit second tronçon de bague étant spatialement distinct, et distant, du premier tronçon de bague.

Avantageusement, la séparation spatiale des deux tronçons de bague est aussi bien axiale que radiale.

La séparation axiale s'obtient en étageant axialement, sans recouvrement axial, le premier tronçon de bague et le second tronçon de bague, de telle manière que l'étendue axiale (ou « hauteur axiale ») du premier tronçon cylindrique de bague, c'est-à-dire la plage d'abscisses axiales couverte par le premier tronçon, est différente, de l'étendue axiale du second tronçon cylindrique de bague, c'est-à-dire la plage d'abscisses axiales couverte par ledit second tronçon.

La séparation radiale s'obtient en configurant le premier tronçon de manière à ce qu'il présente, sur au moins une partie de sa hauteur axiale (et de préférence sur la majorité ou la totalité de sa hauteur axiale), en section perpendiculaire à l'axe central (XX'), des limites radiales, externe et/ou interne, qui diffèrent des limites radiales correspondantes, respectivement externe et/ou interne, du second tronçon, et plus particulièrement, de façon préférentielle, de manière à ce que le premier tronçon présente des limites radiales qui sont radialement plus proches de l'axe central (XX') que celles du second tronçon, de telle sorte que le premier tronçon soit, radialement, strictement resserré sur l'axe par rapport au second tronçon.

Concrètement, la séparation spatiale des tronçons de bague, et donc des zones d'interférence, permet de consacrer séparément un premier tronçon de bague, et donc une première zone d'interférence, spécifiquement à la fixation par serrage (et le cas échéant par frettage) de la première pièce, et un second tronçon de bague, et donc une seconde zone d'interférence, spécifiquement à la fixation par serrage (et le cas échéant par frettage) de la seconde pièce.

Cette répartition des zones de serrage permet avantageusement à la bague d'assemblage conforme à l'invention de gérer le serrage d'une façon individuelle et différente dans chaque tronçon auquel une pièce (unique) est affectée, et donc de gérer individuellement le serrage pour chaque pièce à assembler, tout en assurant globalement l'unité de l'assemblage.

Concrètement, la distribution spatiale des tronçons de bague permet au premier tronçon de présenter des propriétés mécaniques et un comportement qui sont relativement indépendants des propriétés et du comportement du second tronçon, et réciproquement, ce qui permet à la bague de s'adapter spécifiquement aux tolérances dimensionnelles, aux effets de dilatation thermique, et aux états de contraintes qui sont propres à chaque jonction avec l'une des pièces.

Ainsi, on peut envisager par exemple l'assemblage d'une première pièce formée par un moteur à enveloppe d'acier, présentant un coefficient de dilatation thermique relativement faible mais une dispersion dimensionnelle de fabrication (intervalle de tolérance) large, sur une seconde pièce formée par un carter en alliage d'aluminium usiné, présentant un coefficient de dilatation thermique nettement plus élevé que l'enveloppe en acier du moteur, mais une faible dispersion dimensionnelle de fabrication (l'usinage garantissant un intervalle de tolérance restreint).

Alors, on pourra utiliser une bague d'assemblage en acier, dont la grande capacité à se déformer avant de rompre permettra au premier tronçon d'adapter très largement l'ampleur de sa déformation initiale, et donc d'accommoder la dimension (diamètre) de l'enveloppe du moteur quelle que soit la valeur prise par cette dimension dans la large plage de tolérances prévisibles. En revanche, une fois serrée sur l'enveloppe du moteur, le premier tronçon de bague présentera un comportement de dilatation thermique proche de, voire identique à, celui de l'enveloppe du moteur, si bien que les variations de température de fonctionnement n'affecteront que peu voire pas le serrage du moteur au sein du premier tronçon.

A l'inverse, la déformation initiale du second tronçon pour accommoder le carter, précisément usiné, sera sensiblement identique d'un assemblage à l'autre, et permettra au second tronçon de conserver une certaine « réserve » de déformation, qu'il pourra exploiter pour accommoder, cette fois, les dilatations thermiques dudit carter, plus importantes que celles dudit second tronçon.

Par ailleurs, lorsque l'on montera par serrage, voire par frettage, la bague d'assemblage conforme à l'invention sur la première pièce, respectivement sur la seconde pièce, ladite bague, et plus particulièrement le tronçon de bague concerné, se plastifiera, c'est-à-dire se déformera plastiquement de manière permanente (irréversible), pour accommoder les dimensions de chaque pièce, sitôt que les contraintes exercées pour insérer de force la bague contre la pièce dépasseront la limite élastique de ladite bague.

C'est donc la bague d'assemblage qui servira de martyr, et qui endurera l'essentiel sinon la totalité des déformations plastiques imposées par le montage.

De la sorte, les contraintes d'assemblage subies par les pièces (ici l'enveloppe du moteur d'assistance, et surtout le carter de direction) ne dépasseront pas un seuil prédéterminé, qui correspond sensiblement à la limite élastique respective de chacune desdites pièces, ce qui évitera de dégrader lesdites pièces.

L'invention réduira donc considérablement les risques de fissuration et d'éclatement des pièces, notamment de la seconde pièce, aussi bien au moment de l'assemblage qu'ultérieurement, pendant le fonctionnement.

La durée de vie de l'assemblage s'en trouvera nettement améliorée.

On notera par ailleurs que, une fois atteint un degré de déformation plastique permanente de la bague qui est suffisant pour accommoder les dimensions de la pièce, c'est la tension élastique de la bague, due à la déformation élastique réversible de ladite bague (déformation élastique qui varie notamment au fil des changements de température et des contraintes exercées par la pièce à l'encontre de la bague), qui assurera le maintien, par frottement, de la liaison (du serrage) avec la pièce concernée.

Enfin, l'invention permet avantageusement d'utiliser, pour réaliser la fixation de la première pièce sur la seconde pièce, une bague d'assemblage qui présente une forme particulièrement simple, notamment une forme de révolution, qui est facile et peu onéreuse non seulement à fabriquer mais également à contrôler, puisqu'elle peut être définie au moyen de paramètres métrologiques simples (tels que, typiquement, les diamètres caractéristiques des tronçons, et l'épaisseur radiale du corps de la bague).

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en coupe longitudinale, un exemple d'assemblage, selon l'invention, d'un moteur dans un carter au moyen d'une première variante de bague d'assemblage.
La figure 2 illustre, selon une vue d'ensemble en perspective, la bague d'assemblage mise en oeuvre au sein de l'assemblage de la figure 1.
La figure 3 illustre, selon une vue partielle en coupe longitudinale, la bague d'assemblage des figures 1 et 2.
La figure 4 illustre, selon une vue en coupe longitudinale, un exemple d'assemblage, selon l'invention, d'un moteur dans un carter au moyen d'une seconde variante de bague d'assemblage, pourvue d'une collerette.
La figure 5 illustre, selon une vue de détail agrandie, une partie de l'assemblage de la figure 4.
La figure 6 illustre, selon une vue partielle en coupe longitudinale, la bague d'assemblage à collerette utilisée dans l'assemblage des figures 4 et 5.
La figure 7 illustre, selon une vue schématique en coupe longitudinale, un procédé de fabrication d'une bague d'assemblage conforme à l'invention, par emboutissage puis poinçonnage.

La présente invention concerne un procédé d'assemblage qui permet de fixer une première pièce 1 à une seconde pièce 2.

Selon une variante d'application préférentielle, la première pièce 1 sera formée par un moteur, et plus précisément par l'enveloppe dudit moteur.

Ladite enveloppe de moteur sera de préférence métallique, par exemple en acier, et présentera une forme sensiblement cylindrique, de préférence une forme de cylindre de base circulaire.

Le moteur sera de préférence un moteur électrique, et plus particulièrement un moteur (électrique) d'assistance de direction destiné à équipé un dispositif de direction assistée de véhicule automobile conçu pour le transport de marchandises et/ou de personnes.

De préférence, la seconde pièce 2 formera un carter, typiquement un carter de direction destiné à être fixé au châssis d'un véhicule.

Ledit carter de direction 2 pourra être réalisé d'un seul tenant, ou bien au contraire en plusieurs parties, par commodité de fabrication et d'assemblage.

Ledit carter de direction 2 sera conçu pour recevoir, outre le moteur d'assistance 1, un mécanisme de direction.

Ledit mécanisme de direction comprendra de préférence un pignon d'entraînement porté par une colonne de direction et engrenant sur une crémaillère, crémaillère qui est guidée en translation dans le carter de direction et qui commande la manoeuvre de biellettes de direction pour modifier l'orientation des roues directrices du véhicule.

Par commodité de description et de numérotation, on pourra assimiler dans ce qui suit la première pièce 1 à l'enveloppe du moteur, et plus simplement au moteur, et la seconde pièce 2 au carter.

De préférence l'assemblage obtenu selon le procédé conforme à l'invention sera conçu pour supporter des températures de fonctionnement couvrant au moins la plage comprise entre 0°C et +100°C, de préférence entre -40°C et +120°C, voire entre -50°C et +150°C. Le choix et le dimensionnement des matériaux constitutifs notamment des pièces 1, 2 et de la bague d'assemblage 3 sera donc fait en conséquence.

Au cours du procédé d'assemblage, on interpose entre la première pièce 1 et la seconde pièce 2 une bague d'assemblage 3 (ci-après « bague »).

Le procédé comprend donc, préalablement, une étape (a) de fourniture d'une bague d'assemblage 3.

La bague d'assemblage 3 est cylindrique, d'axe central (XX'), de préférence rectiligne.

Ladite bague 3 présente une face radialement interne 31, orientée radialement vers l'axe central (XX'), et une face radialement externe 3E orientée radialement à l'opposé de l'axe central (XX') par rapport à la face radialement interne 31.

La matière constitutive du corps de la bague 3 qui se trouve comprise entre la surface radialement interne 3I et la surface radialement externe 3E forme donc la paroi latérale de la bague, qui s'enroule autour de l'axe central (XX').

De préférence, l'épaisseur E3 de ladite paroi latérale, c'est-à-dire la distance qui sépare radialement la surface interne 3I de la surface externe 3E, est sensiblement constante sur toute l'étendue axiale de la bague 3, et sur tout le secteur angulaire couvert (en lacet) par ladite bague autour de l'axe central (XX').

Par commodité de description, on désignera par « axiale » une direction ou une dimension considérée selon la direction de l'axe central (XX'), ou parallèlement à ce dernier.

On nommera « abscisse » les coordonnées associées à l'axe central (XX') et permettant de repérer une position axiale le long dudit axe central (XX').

De même, on désignera par « radiale » une direction ou une dimension considérée transversalement à l'axe central (XX'), selon une direction sensiblement perpendiculaire audit axe central (XX').

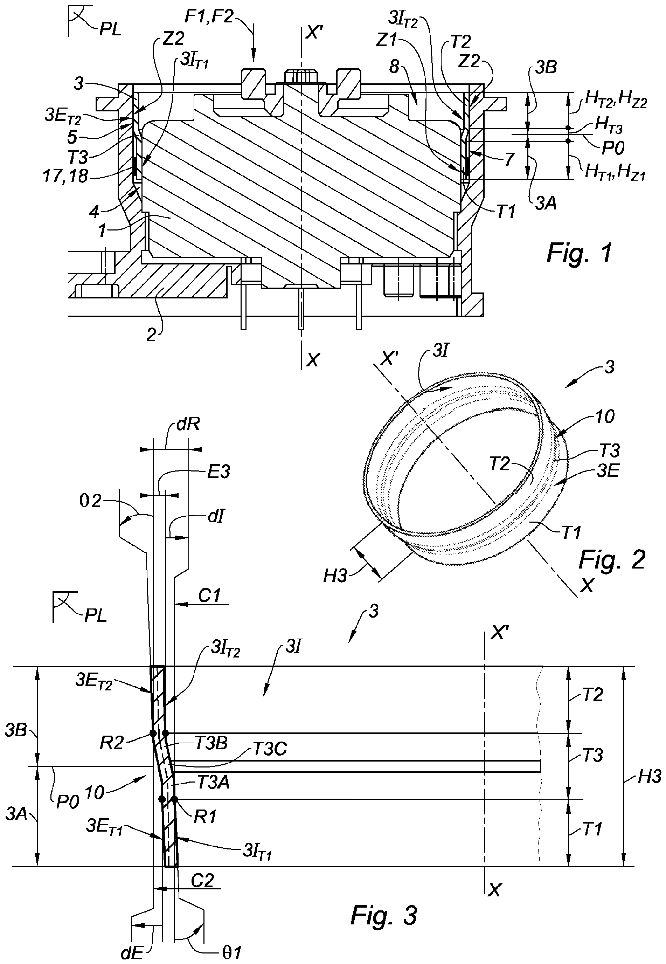

Au cours du procédé conforme à l'invention, et plus particulièrement au cours d'une étape (b) de solidarisation de la bague d'assemblage 3 avec la première pièce 1, on engage de force la face radialement interne 3I de la bague d'assemblage 3 sur la première pièce 1 (ici contre une, et autour d'une, face radialement externe de la première pièce 1, c'est-à-dire une face radialement externe de l'enveloppe du moteur), de manière à créer entre la première pièce 1 et la bague 3 un contact de serrage dit « premier contact de serrage » qui solidarise la première pièce 1 et la bague 3, ledit premier contact de serrage occupant, sur la surface radialement interne 3I de la bague, une surface de contact totale dite « première zone d'interférence » Z1, tel que cela est visible sur les figures 1, 4 et 5.

Au cours du procédé conforme à l'invention, et plus particulièrement au cours d'une étape (c) de solidarisation de la bague d'assemblage 3 avec la seconde pièce 2, on engage également de force la face radialement externe 3E de la bague d'assemblage 3 sur la seconde pièce 2 (ici, contre une, et à l'intérieur d'une, face radialement interne de la seconde pièce 1, c'est-à-dire une face radialement interne du carter) de manière à créer entre la seconde pièce 2 et la bague 3 un contact de serrage dit « second contact de serrage » qui solidarise la seconde pièce 2 et la bague 3, ledit second contact de serrage occupant, sur la surface radialement externe 3E de la bague, une surface de contact totale dite « seconde zone d'interférence » Z2, tel que cela est visible sur les figures 1, 4 et 5.

L'engagement forcé de la bague 3 sur la première pièce 1, respectivement sur la seconde pièce 2, est obtenu par montage sous presse, et/ou par frettage (avec dilatation à chaud et/ou contraction à froid de la pièce 1, 2 concernée, ou le cas échéant de la bague 3), avec une intensité d'effort suffisante pour occasionner, au moins localement, en sus d'une déformation élastique, une déformation plastique permanente de la bague 3,en particulier dans la première et la seconde zone d'interférence Z1, Z2.

Ainsi, lors de l'assemblage selon l'invention, on forcera la déformation plastique (irréversible) de la bague 3, et plus particulièrement du premier tronçon T1, à l'encontre de la première pièce 1, de manière à ce que la bague 3 accommode plastiquement les dimensions de ladite première pièce 1, et l'on forcera de même la déformation plastique (irréversible) de la bague 3, et plus particulièrement du second tronçon T2, à l'encontre de la seconde pièce 2, de manière à ce que la bague 3 accommode plastiquement les dimensions de ladite seconde pièce 2.

En d'autres termes, on créera les contacts entre la bague 3 et les pièces 1, 2 par déformation plastique de ladite bague 3 (tout en restant par ailleurs sous la limite élastique Rp_{0,2} des pièces 1, 2, c'est-à-dire sans occasionner de déformation plastique desdites pièces 1, 2, à tout le moins sans occasionner de déformation plastique desdites pièces 1, 2 supérieure à 0,2 %).

La tension élastique liée à la déformation élastique résiduelle de la bague 3 à l'encontre des pièces 1, 2 assurera quant à elle le serrage du premier tronçon T1 contre la première pièce 1, et respectivement du second tronçon T2 contre la seconde pièce 2.

En pratique, un assemblage obtenu par un tel ajustement serré, impliquant une déformation plastique de la bague 3 en sus de sa déformation élastique, ne peut donc en principe pas être démonté sans endommager la bague 3.

Avantageusement, le contact de serrage permet une fixation, ici par constriction, qui supprime tous les degrés de liberté entre la bague d'assemblage 3 et la pièce 1, 2 concernée.

En particulier, dans le cas de l'assemblage d'un moteur 1 sur un carter 2, le contact de serrage, c'est-à-dire le frottement induit entre la bague 3 et la pièce 1, 2 concernée du fait de la mise en tension de la bague 3 et de la mise en compression de ladite pièce 1 (ou inversement pour la seconde pièce 2), sera suffisant pour que l'assemblage puisse résister, sans que la pièce 1, 2 tourne dans la bague 3, à un couple de torsion, orienté ici autour de l'axe central (XX'), qui sera au moins égal au couple maximal que peut délivrer le moteur 1, voire au moins égal à cinq fois ledit couple maximal que peut délivrer le moteur 1.

A titre indicatif, en particulier dans le cadre d'une application à l'assemblage d'un moteur 1 de direction assistée, le serrage (et donc le degré d'ajustement choisi par le dimensionnement de la bague 3 par rapport aux pièces 1, 2, ainsi que la conformation et l'étendue de la surface de contact offerte par la bague 3 à chaque pièce 1, 2) pourra être déterminé de sorte à pouvoir résister à un couple de torsion au moins égal à 5 N.m, voire au moins égal à 25 N.m

De façon particulièrement préférentielle, le serrage interviendra seulement de façon mécanique, par déformation, principalement supportée par la bague 3, sans ajout d'autres moyens de blocage, et notamment sans ajout de colle, ni de vis de pression, ni de cales de renfort, ni de soudures.

De préférence, tel que cela est illustré sur les figures 1, 4 et 5, la seconde pièce 2 (carter) comprend un logement 4 destiné à recevoir au moins en partie la première pièce 1 (moteur).

Ledit logement 4 est de préférence suffisamment spacieux pour pouvoir accueillir, et donc contenir, la majorité (c'est-à-dire plus de la moitié du volume hors-tout) de la première pièce, voire la quasi-totalité (au moins 90 %, voire 100% du volume) de ladite première pièce 1.

De même, le logement 4 est de préférence agencé de manière à pouvoir accueillir, et donc contenir, la majorité de la bague 3 (c'est-à-dire que la bague peut être introduite sur plus de 50 % de sa hauteur axiale H3 hors tout dans ledit logement 4), voire la quasi-totalité de ladite bague 3 (c'est-à-dire que la bague peut être introduite sur plus de 90 %, voire à 100 %, de sa hauteur axiale H3 hors tout dans ledit logement 4).

La bague d'assemblage 3, ainsi que la première pièce 1 (moteur), pourront ainsi avantageusement être engagées et contenues chacune en majorité voire en totalité à l'intérieur de la seconde pièce 2 (carter), en l'espèce à l'intérieur du logement 4.

Un tel agencement par emboîtement de la seconde pièce 2, de la bague 3 et de la première pièce 1, ici selon un emboîtement concentrique convergeant radialement vers l'axe central (XX'), c'est-à-dire selon un emboîtement au sein duquel la seconde pièce 2, la bague 3 et la première pièce 1 sont disposées radialement l'une dans l'autre de manière à se rapprocher successivement (dans cet ordre) de l'axe central (XX'), garantira la compacité de l'assemblage, et offrira en outre une bonne protection à la première pièce 1, à la bague 3, ainsi qu'aux zones d'interférence Z1, Z2, vis-à-vis de l'environnement dudit assemblage, du fait que la seconde pièce 2 forme ainsi une barrière protectrice qui, en configuration assemblée, enveloppe la bague 3 et la première pièce 1.

A ce titre, on notera que l'on pourra ainsi faire l'économie d'un traitement anti-corrosion de l'enveloppe en acier du moteur 2, puisque ladite enveloppe sera logée à l'abri dans le logement 4, scellé de manière étanche à l'eau et à la poussière par la bague 3.

Le logement 4 peut notamment présenter un alésage 5, centré sur l'axe central (XX') et dans lequel la bague 3 peut être enfoncée (en force) de manière à ce que la surface radialement externe 3E de la bague vienne en appui, sous pression radiale, contre la paroi dudit alésage 5, tel que cela est visible sur les figures 1, 4 et 5.

L'alésage 5 est de préférence usiné et rectifié selon une tolérance relativement sévère prédéfinie, typiquement inférieure ou égale à 0,05 mm (au diamètre), afin de garantir la reproductibilité et la faible dispersion de l'ajustement serré.

En ce qui concerne l'ordre de fixation des pièces, on pourra de préférence d'abord rapporter et fixer la bague 3 sur la seconde pièce 2, ici dans le logement 4, et plus particulièrement enfiler la bague 3 en force dans l'alésage 5, en abordant le logement 4 selon une direction de pénétration sensiblement parallèle à l'axe central (XX'), puis, seulement ensuite, enfiler à son tour la première pièce 1 (le moteur) dans le logement 4, à travers et contre la bague 3 retenue par la première pièce 1.

Toutefois, on pourrait parfaitement, sans sortir du cadre de l'invention, envisager un ordre inverse, consistant à rapporter et fixer d'abord la bague 3 sur (et plus particulièrement autour de) la première pièce 1 (ici le moteur) avant de reporter sur la seconde pièce 2, et plus particulièrement d'introduire dans le logement 4, le sous-ensemble bague 3 / première pièce 1 ainsi préalablement constitué.

Quel que soit l'ordre d'assemblage considéré, on remarquera que l'utilisation d'une bague d'assemblage 3, de type bague de frettage, pour assembler les pièces 1 et 2 procure une fixation particulièrement stable, avec une bonne assise, du fait notamment de la grande étendue des surfaces de contact entre la bague 3 et chacune des pièces 1, 2 (tant en diamètre, et donc en périmètre, qu'en hauteur axiale).

Selon l'invention, on utilise une bague d'assemblage 3 qui comporte un premier tronçon de bague T1 cylindrique (ci-après « premier tronçon ») et un second tronçon de bague T2 cylindrique (ci-après « second tronçon ») qui sont étagés axialement l'un par rapport à l'autre, le long de l'axe central (XX'), et qui présentent des dimensions (radiales) différentes l'un de l'autre, en section normale à l'axe central (XX'), de manière à confiner la première zone d'interférence Z1 dans le premier tronçon de bague T1 et, respectivement, la seconde zone d'interférence Z2 dans le second tronçon de bague T2, si bien que la première zone d'interférence Z1 et la seconde zone d'interférence Z2 ne présentent axialement pas de chevauchement l'une avec l'autre.

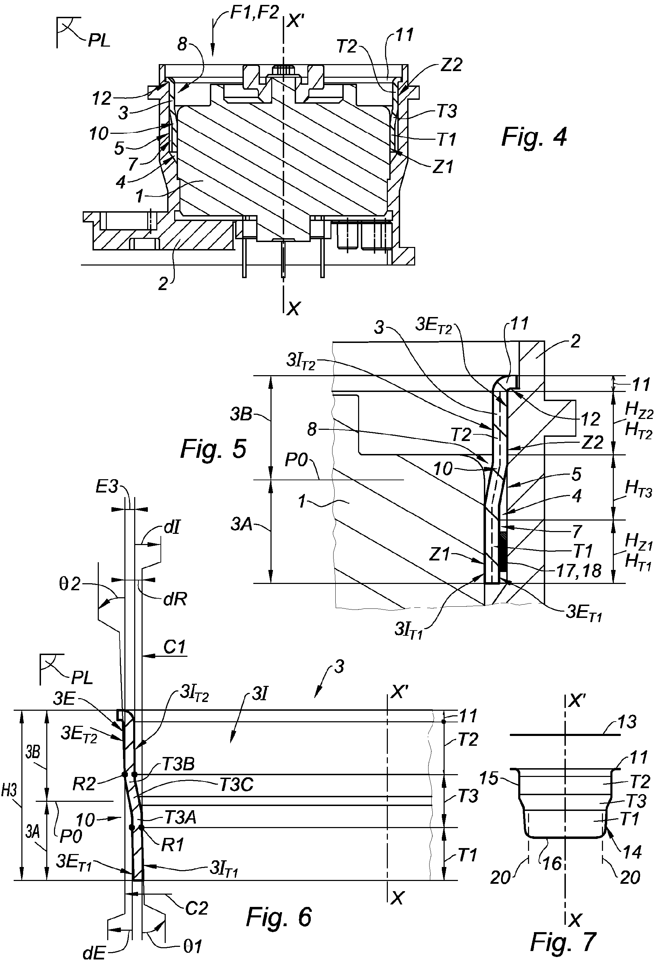

De préférence, on configure les tronçons T1, T2 de la bague 3, au regard des pièces à assembler 1, 2, de telle manière que d'une part on circonscrit axialement la totalité des phénomènes d'interférence (de serrage) qui se produisent entre la bague 3 et la première pièce 1, c'est-à-dire plus particulièrement que l'on circonscrit l'étendue de la première zone d'interférence Z1, dans une première plage d'abscisses (ou « hauteur axiale ») H_{Z1}, qui est contenue voire coïncide (tel que cela est illustré sur les figures 1 et 5) avec la plage d'abscisses H_{T1} occupée par le premier tronçon T1, et que d'autre part on circonscrit axialement, de manière analogue, la totalité des phénomènes d'interférence (de serrage) qui se produisent entre la bague 3 et la seconde pièce 2, c'est-à-dire plus particulièrement que l'on circonscrit l'étendue de la seconde zone d'interférence Z2, dans une seconde plage d'abscisses H_{Z2}, qui est contenue voire coïncide (tel que cela est illustré sur les figures 1 et 5) avec la plage d'abscisses H_{T2} occupée par le second tronçon T2, et, surtout, qui ne présente aucun recouvrement axial avec la première plage d'abscisse H_{Z1}, aucune inclusion dans la première plage d'abscisse H_{Z1}, ni aucune plage (axiale) commune avec ladite première plage d'abscisse H_{Z1} (et réciproquement).

On notera qu'on désigne ici par « tronçon » de bague T1, T2, au sens usuel de ce terme, une « tranche » du cylindre constitutif de ladite bague 3, tranche qui est comprise entre deux plans de base fictifs normaux à l'axe central (XX') et distants axialement l'un de l'autre.

Avantageusement, la répartition tant axiale (par leur étagement le long de l'axe) que radiale (par leur différence de section normale à l'axe) des premier et second tronçons de bague T1, T2 permet de séparer, aussi bien axialement que radialement, les deux zones d'interférence Z1, Z2, en faisant en sorte que chacune desdites zones d'interférences Z1, respectivement Z2, soit contenue dans (limitée à) un tronçon T1, respectivement T2, qui lui est propre.

Plus particulièrement, on pourra ainsi définir (c'est-à-dire qu'il existera), le long de l'axe central (XX') au moins un plan de jauge P0 fictif, perpendiculaire audit axe central (XX'), qui subdivise axialement la bague 3 en une portion aval 3A située d'un côté dudit plan de jauge P0, ici la portion inférieure sur les figures 1, 3, 4, 6, et une portion amont 3B, située de l'autre côté dudit plan de jauge P0, de telle sorte que la première zone d'interférence Z1 (et, structurellement, le premier tronçon T1) est contenue dans, et limitée à, la portion aval 3A de la bague 3, tandis que la seconde zone d'interférence Z2 (et, structurellement, le second tronçon T2) est contenue dans, et limitée à, la portion amont 3B, sans traverser axialement la frontière formée par le plan de jauge P0.

En d'autres termes, selon l'invention on peut préférentiellement définir, au sein de la bague d'assemblage 3, (au moins) un plan de jauge P0 normal à l'axe central (XX') de ladite bague 3, qui est tel qu'une première zone d'interférence Z1, qui correspond à, et couvre, la totalité des phénomènes d'interférence de serrage (par constriction radiale) qui se produisent entre la bague 3 et la première pièce 1 (moteur), est contenue dans, et limitée à un côté du plan de jauge P0, correspondant à la portion aval 3A de la bague, tandis qu'une seconde zone d'interférence Z2, qui correspond à, et couvre, la totalité des phénomènes d'interférence de serrage (par constriction radiale) qui se produisent entre la bague 3 et la seconde pièce 2 (carter), est contenue dans, et limitée à l'autre côté dudit plan de jauge P0, correspondant à la portion amont 3B de la bague.

De préférence, on pourra considérer comme plan de jauge P0 le plan médian qui coupe la bague 3 à la moitié de sa hauteur axiale totale H3 et perpendiculairement à l'axe central (XX'), de telle sorte que la première zone d'interférence Z1 sera cantonnée axialement dans une portion aval 3A formant une première moitié de la bague 3, c'est-à-dire ici, sur les figures 1 à 6, dans la moitié inférieure de la bague 3, tandis que la seconde zone d'interférence Z2 sera cantonnée dans une portion amont 3B formant l'autre moitié de la bague 3, située de l'autre côté du plan médian P0, ici la moitié supérieure de ladite bague.

De même, on pourra définir au moins une enveloppe de jauge cylindrique C1, C2, centrée sur l'axe central (XX') et parallèle audit axe central (XX'), ladite enveloppe de jauge cylindrique C1, C2 marquant une frontière radiale qui délimite d'une part un espace cylindrique intérieur (fermé radialement), contenant l'axe central (XX'), et à l'intérieur duquel l'une des zones d'interférence, de préférence la première zone d'interférence Z1, se trouve cantonnée radialement, et d'autre part un espace cylindrique extérieur (ouvert radialement sur l'extérieur), situé radialement au-delà de ladite surface de jauge C1, C2, et dans lequel l'autre zone d'interférence, ici la seconde zone d'interférence Z2, est cantonnée.

Ainsi, on pourra cantonner radialement la première zone d'interférence Z1 dans une première couronne, située à une première distance (plage de distance) radiale de l'axe central (XX'), et cantonner radialement la seconde zone d'interférence Z2 dans une seconde couronne située à une seconde distance radiale de l'axe central (XX'), distincte de la première distance radiale, et de préférence plus éloignée de l'axe central (XX') que la première couronne dans le cas des variantes de réalisation illustrée sur les figures 1 et 4 et 5.

Selon une variante d'agencement particulièrement préférée, on pourra ainsi définir, tel que cela est visible sur les figures 3 et 6, au moins une première enveloppe de jauge cylindrique C1 telle que toute la face interne 3I de la portion aval 3A de la bague 3 (ici en-dessous du plan de jauge P0), et en particulier la face interne 3I_{T1} du premier tronçon T1, est entièrement contenue radialement à l'intérieur de ladite première enveloppe de jauge C1, tandis que toute la face interne 3I de la portion amont 3B de la bague 3, et en particulier la face interne 3I_{T2} du second tronçon T2, est entièrement située radialement au-delà de ladite première enveloppe de jauge C1, c'est-à-dire est plus éloignée de l'axe central (XX') que la face interne de la portion aval 3A de la bague.

De même, de manière alternative, ou de préférence cumulative, on pourra préférentiellement définir, tel que cela est visible sur les figures 3 et 6, une seconde enveloppe de jauge cylindrique C2 telle que toute la face externe 3E de la portion amont 3B de la bague 3 (ici au-dessus du plan de jauge P0), et en particulier la face externe 3E_{T2} du second tronçon T2, est entièrement située radialement au-delà de ladite seconde enveloppe de jauge C2, tandis que toute la face externe 3E de la portion aval 3A de la bague 3, et en particulier la face externe 3E_{T1} du premier tronçon T1, est entièrement contenue radialement à l'intérieur de ladite seconde enveloppe de jauge C2, c'est-à-dire est plus proche de l'axe central (XX') que la face externe de la portion amont 3B.

Avantageusement, la séparation spatiale maîtrisée des zones d'interférence Z1, Z2 permet de faire en sorte que, quelle que soit l'abscisse que l'on considère le long de l'axe (XX'), dans la hauteur axiale hors-tout H3 couverte par la bague 3, et quelle que soit, à ladite abscisse considérée, la direction azimutale que l'on considère (en lacet) autour de l'axe (XX'), dans la majorité et de préférence dans la totalité du secteur angulaire couvert par la bague autour dudit axe central (XX'), on ne trouve pas d'endroit dans lequel la bague 3 serait bloquée simultanément sur ses deux faces, interne 3I et externe 3E, à la même abscisse, c'est-à-dire dans lequel la bague 3 serait pincée, selon une direction strictement radiale, à une même abscisse, entre la première pièce 1 et la seconde pièce 2.

En d'autres termes, la séparation des zones d'interférence Z1, Z2 permet avantageusement d'interposer radialement la bague 3 entre la première pièce 1 et la seconde pièce 2, selon une configuration qui est donc particulièrement robuste et stable, mais sans pour autant coincer totalement la bague 3 en sandwich.

Ainsi, l'invention permet de maintenir dégagée la face radialement externe de la bague 3E_{T1} qui est située dans le premier tronçon T1, sur la face (radialement) opposée à la première zone d'interférence Z1 (c'est-à-dire au « dos » de ladite première zone d'interférence Z1) et donc à l'opposé de la face interne 3I_{T1} dudit premier tronçon T1 contre laquelle s'appuie la première pièce 1, tel que cela est illustré notamment sur la figure 5.

On libère ainsi un premier espace de dégagement 7 (ici l'interstice compris entre la face externe 3E_{T1} du premier tronçon T1 et l'alésage 5), qui, laissé vacant, préserve une certaine marge de débattement radial pour le premier tronçon T1, qui conserve ainsi une capacité à se déformer radialement, et plus particulièrement à se dilater radialement, ici en éloignement de l'axe central (XX'), vers l'extérieur, de manière assez libre, sans être entravé par la seconde pièce 2 (en l'espèce sans buter contre l'alésage 5).

De manière analogue, l'invention permet de maintenir dégagée la face radialement interne de la bague 3I_{T2} qui est située dans le second tronçon T2, sur la face (radialement) opposée à la seconde zone d'interférence Z2 (c'est-à-dire au « dos » de ladite seconde zone d'interférence Z2) et donc à l'opposé de la face externe 3E_{T2} dudit premier tronçon T1, tel que cela est illustré notamment sur la figure 4.

Ici encore, on peut libérer ainsi un second espace de dégagement 8 qui permet au second tronçon T2 de conserver une capacité de déformation radiale, et notamment de dilatation, ici en rapprochement de l'axe central (XX'), vers l'intérieur, sans être entravé par la première pièce 1.

Avantageusement, ces espaces de dégagement 7 et 8 évitent les entraves indésirables qui pourraient s'opposer aux débattements axiaux utiles des première et seconde pièces 1, 2, notamment lors des opérations d'assemblage puis lorsque l'assemblage constitué est soumis, en fonctionnement, à des variations de température.

Ainsi, le premier espace de dégagement 7 permet d'introduire facilement la bague 3 dans le logement 4 de la seconde pièce, en faisant pénétrer d'abord le premier tronçon T1 de la bague 3 dans l'alésage 5, puis ensuite le second tronçon T2, sans que le premier tronçon T1 n'interfère avec l'alésage 5.

En fonctionnement, le premier espace de dégagement 7 permet à l'assemblage d'accommoder les composantes axiales des dilatations différentielles entre la bague 3 et la seconde pièce 2 (carter), la paroi de l'alésage 5 conservant une possibilité de « glisser » axialement sous la contrainte par rapport à la face radialement externe 3E de la bague 3, et plus particulièrement par rapport à la face radialement externe du second tronçon 3E_{T2}.

De même, le second espace de dégagement 8 facilite l'introduction, de la première pièce 1 (moteur) à l'intérieur de la bague 3, le cas échéant alors que ladite bague 3 se trouve déjà fixée dans le logement 4, en autorisant notamment la première pièce 1 à traverser (axialement, ici selon un mouvement de descente) le second tronçon T2, sans interférence avec ledit second tronçon T2, pour que la première pièce 1 puisse atteindre sans encombre le premier tronçon T1 où elle se fixe.

On notera par ailleurs que la forme « cylindrique » de la bague d'assemblage 3 peut être comprise au sens large, le cylindre pouvant par exemple être généré par des lignes génératrices qui ne sont pas strictement parallèles à l'axe central (XX'), et/ou qui décrivent une base (normale à l'axe central) qui n'est pas circulaire mais par exemple ovale ou polygonale.

Quoi qu'il en soit, le premier tronçon T1, et plus particulièrement la face interne 3I_{T1} dudit premier tronçon, présentera une forme et des dimensions sensiblement conjuguées à celles de la première pièce 1 sur laquelle ledit premier tronçon doit venir en prise.

Il en ira de même pour le second tronçon T2, et plus particulièrement pour la face externe 3E_{T2} dudit second tronçon, qui présentera une forme et des dimensions sensiblement conjuguées à celles de la seconde pièce 2 sur laquelle ledit second tronçon doit venir en prise.

Bien entendu, lesdites dimensions du premier tronçon T1, respectivement du second tronçon T2, et plus particulièrement des faces « fonctionnelles » desdits tronçons T1, T2 sur lesquelles les pièces 1, 2 viennent en appui (c'est-à-dire exercent une pression radiale), seront adaptées afin de produire l'ajustement serré recherché, et plus particulièrement afin de provoquer la déformation plastique, au moins locale, du premier tronçon T1 et du second tronçon T2 lors du montage de force sur leur pièce 1, 2 respective.

En l'espèce les dimensions (nominales, au repos, avant assemblage) du premier tronçon T1 seront donc resserrées par rapport aux dimensions nominales de la première pièce 1, tandis que les dimensions nominales du second tronçon T2 seront élargies par rapport aux dimensions nominales de la seconde pièce 2.

Selon une variante de mise en oeuvre particulièrement préférée, et tel que cela est notamment illustré sur les figures 2, 3 et 6, la bague d'assemblage 3 présente une forme de révolution autour de l'axe central (XX').

Ladite forme de révolution sera générée par balayage, autour de l'axe central (XX'), d'une section dite « section de profil » considérée dans un plan de coupe longitudinale PL contenant ledit axe central (XX'), tel que cela est représenté notamment sur les figures 3 et 6.

Avantageusement, la mise en oeuvre d'une bague 3 de révolution permet d'obtenir des surfaces radialement interne 3I et radialement externe 3E, notamment au niveau des premier et second tronçons T1, T2, qui se présentent sous forme de bandes annulaires lisses, de rayon constant (à une/chaque abscisse considérée), sans ondulations, ce qui procure un contact avec les pièces 1, 2, et donc un serrage desdites pièces 1, 2, particulièrement homogène, stable et bien réparti autour de l'axe central (XX'), sur (tout) le périmètre de la bague 3.

Une forme de révolution permet également une fabrication rapide, économe et précise de la bague 3, notamment par emboutissage d'un flan, par déformation plastique d'un tube, par exemple par hydroformage, ou bien encore par tournage, et simplifie la définition des contrôles métrologiques.

Selon une possibilité de mise en oeuvre, la bague 3 pourrait éventuellement être fendue sur toute sa hauteur axiale H3, de sorte à se présenter sous forme d'un ruban ouvert recourbé sur lui-même.

Toutefois, selon une variante de réalisation particulièrement préférentielle la bague d'assemblage 3 forme, tel que cela est notamment visible sur la figure 2, un anneau fermé présentant une continuité de matière tout autour de l'axe central (XX').

En d'autres termes, ladite bague 3 est de préférence dépourvue de fente qui la couperait axialement sur toute sa hauteur axiale.

Un tel agencement, non fendu, est en effet beaucoup plus stable dimensionnellement.

Il permet par conséquent de mieux centrer la première pièce 1 (moteur), avec une précision et une reproductibilité accrues.

Un tel agencement non fendu offre en outre un serrage plus précis, avec un ajustement serré mieux maîtrisé, plus homogène, également réparti sur tout le tour de la bague 3, à 360 degrés autour de l'axe central (XX').

Le serrage ainsi obtenu par une bague continue est également plus robuste qu'un serrage obtenu par une bague fendue, un serrage par bague fendue étant en effet davantage exposé à des relâchements intempestifs, et donc à un risque de glissement (notamment en torsion) de la première pièce 1 par rapport à la bague 3 et/ou par rapport à la seconde pièce 2.

Globalement, la paroi latérale de la bague 3 sera de préférence pleine, non ajourée.

En particulier, le premier tronçon T1 et le second tronçon T2, pourront de préférence être dépourvus de toute fente, trou débouchant, ou découpe, notamment de toute fente axiale qui déboucherait à une extrémité axiale de la bague et serait susceptible d'affaiblir le serrage.

De préférence, tel que cela est bien visible sur les figures 1, 3, 4, 5 et 6, le premier tronçon de bague T1 est, en particulier au repos, avant que la bague 3 ne soit engagée en force sur les pièces 1, 2, plus resserré sur l'axe central (XX') que le second tronçon de bague T2, de telle sorte que la face radialement interne 3I_{T1} dudit premier tronçon de bague T1 est plus proche radialement de l'axe central (XX') que la face radialement interne 3I_{T2} du second tronçon de bague T2 et, respectivement, la face radialement externe 3E_{T1} du premier tronçon de bague T1 est plus proche radialement de l'axe central (XX') que la face radialement externe 3E_{T2} du second tronçon de bague T2.

Une telle disposition permet notamment de décaler (radialement) les zones d'interférences Z1, Z2 l'une par rapport à l'autre tout en créant (radialement) des espaces de dégagement 7, 8 qui facilitent l'insertion et l'emboîtement successif de la bague dans le logement 4 de la seconde pièce 2 (carter) puis de la première pièce 1 (moteur) dans la bague 3, ou inversement.

Le resserrement du premier tronçon T1 par rapport au second tronçon T2 se retrouve en outre de préférence sur la majorité, et de préférence la totalité du pourtour de la bague 3 autour de l'axe central (XX'), c'est-à-dire dans tous les azimuts compris dans un secteur angulaire (en lacet) supérieur à 180 degrés, à 270 degrés, voire de préférence égal à 360 degrés autour dudit axe central (XX').

En d'autres termes, la face interne 3I_{T1} du premier tronçon T1 (qui vient au contact de la première pièce 1) est de préférence entièrement située en retrait radial de la face interne 3I_{T2} du second tronçon, c'est-à-dire est strictement plus proche de l'axe central (XX') que cette dernière, tandis que la face externe 3E_{T2} du second tronçon T2 (qui vient au contact de la seconde pièce 2) est de préférence entièrement située en déport radial externe de la face externe 3E_{T1} du premier tronçon T1.

Le premier tronçon T1 formera ainsi un tronçon « étroit », plus resserré sur l'axe central (XX') que le second tronçon T2 qui forme un tronçon (légèrement plus) « large ».

A titre indicatif, notamment dans le cadre de l'application du procédé à la fixation d'un moteur d'assistance de direction 1 dans un carter 2, le diamètre intérieur (notamment le diamètre minimal) de la bague 3, et plus particulièrement le diamètre de la première surface de jauge cylindrique C1, et encore plus particulièrement le diamètre de la face radialement interne du premier tronçon 3I_{T1}, pourra être sensiblement compris entre 70 mm et 100 mm, voire entre 80 mm et 90 mm, et par exemple sensiblement égal à 82 mm.

De même, le diamètre extérieur de la bague 3, et plus particulièrement le diamètre de la seconde surface de jauge C2, et encore plus particulièrement le diamètre de la face radialement externe du second tronçon 3E_{T2}, qui sera ici strictement supérieur au diamètre de la face radialement interne du premier tronçon 3I_{T1}, mais également, en l'occurrence, strictement supérieur au diamètre de la face radialement externe 3E_{T1} de ce même premier tronçon T1, sera de préférence également compris entre 70 mm et 100 mm, voire entre 80 mm et 90 mm, et par exemple sensiblement égal à 84,5 mm.

Tel que cela est indiqué sur les figures 3 et 6, on notera dE le décalage radial externe (centrifuge) correspondant au jeu radial externe (minimal) mesuré entre la face radialement externe du premier tronçon 3E_{T1} et la face radialement externe du second tronçon 3E_{T2}.

De même, on notera dl le décalage radial interne (centripète) correspondant au jeu radial interne (minimal) mesuré entre la face radialement interne du second tronçon 3I_{T2} et la face radialement interne du premier tronçon 3I_{T1}.

La valeur du décalage radial externe dE, respectivement la valeur du décalage radial interne dl, sera choisie suffisamment élevée pour créer les jeux fonctionnels destinés à éviter les contacts non désirés entre les pièces 1, 2 et la bague 3, et notamment pour créer (radialement) les espaces de dégagement 7, 8 décrits plus haut.

Ladite valeur de décalage radial externe dE, respectivement ladite valeur du décalage radial interne dl, devra toutefois également être la plus basse possible, afin de réduire les contraintes dans l'assemblage.

La valeur du décalage radial externe dE, respectivement la valeur du décalage radial interne dl, pourra ainsi être comprise entre 0,5 mm et 2 mm, et de préférence sensiblement égale à 1 mm.

Ces valeurs de décalage dE, dl représenteront de préférence entre 0,5 % à 2,5 %, et plus particulièrement entre 1 % et 1,5 % du diamètre moyen de la bague 3, et plus particulièrement du diamètre de la face radialement interne du premier tronçon 3I_{T1}, notamment si l'on considère que ledit diamètre est compris entre 80 mm et 85 mm, et par exemple égal à 82 mm comme indiqué plus haut.

Selon une possibilité d'agencement, particulièrement bien adaptée à une bague 3 d'épaisseur E3 constante, les deux valeurs de décalage radial, externe et interne, seront égales : dE = dl.

Par ailleurs, l'épaisseur E3 de la bague 3 sera bien entendu choisie de manière à ce que la bague soit suffisamment épaisse pour présenter une bonne robustesse, afin de pouvoir résister aux contraintes d'assemblage et notamment à la rupture par déchirure, mais néanmoins suffisamment fine pour avoir une bonne capacité de déformation (aussi bien de déformation plastique que de déformation élastique) garantissant la faisabilité du montage en force et la qualité du serrage.

A ce titre, l'épaisseur (radiale) E3 de ladite bague 3 sera de préférence supérieure ou égale à 0,5 mm, et de préférence à 1 mm, et inférieure ou égale à 2,5 mm, voire à 2 mm.

De préférence, ladite épaisseur E3 sera sensiblement égale à 1,5 mm.

Par ailleurs, pour limiter les contraintes dans les pièces 1, 2 assemblées, on cherchera à limiter, et à minimiser, le décalage radial total dR entre les faces « fonctionnelles » de la bague destinées à recevoir respectivement la première pièce 1 et la seconde pièce 2, c'est-à-dire en l'espèce, tel que cela est illustré sur les figures 3 et 6, à minimiser le décalage radial total dR entre la face radialement externe du second tronçon 3E₁₂ et la face radialement interne du premier tronçon 3I_{T1}.

A cet effet, on dimensionnera de préférence la bague 3 de telle sorte que ledit décalage radial total dR reste inférieur ou égal à 4 mm, de préférence inférieur ou égal à 3 mm, et par exemple sensiblement égal à 2,5 mm.

En l'espèce, ledit décalage total valant dR = dE + E3 = E3 + dl, on aura, au regard des exemples préférés mentionnés plus haut, dR = 1,5 mm_{E3} + 1 mm_{dE}, _{dI} = 2,5 mm.

De préférence, tel que cela est illustré sur les figures 1 à 6, le premier tronçon de bague T1 forme une première extrémité axiale de la bague 3, en l'espèce l'extrémité inférieure sur lesdites figures, et/ou le second tronçon de bague T2 forme une seconde extrémité axiale de la bague 3, opposée à la première extrémité axiale, ici une extrémité supérieure.

Avantageusement, une telle disposition du ou des tronçons T1, T2 aux extrémités de la bague 3 permet d'utiliser une bague qui conserve une bonne compacité, bien qu'elle offre un décalage axial significatif des zones d'interférence Z1, Z2, permettant de séparer lesdites zones d'interférence l'une de l'autre.

En outre, cette disposition extrémale du ou des tronçons T1, T2 permet un accès simple et immédiat des pièces 1 à leur tronçon T1, T2 de fixation respectif, ce qui simplifie l'assemblage.

De préférence, tel que cela est visible sur les figures 1 à 7, le premier tronçon de bague T1 et le second tronçon de bague T2 sont reliés directement l'un à l'autre par un (troisième) tronçon de bague intermédiaire T3, cylindrique, de hauteur axiale H_{T3}, qui est interposé axialement entre lesdits premier et second tronçons de bague T1, T2, et qui forme, par rapport à l'axe central (XX'), un étranglement 10 qui assure une transition depuis un second tronçon de bague T2 qui est plus large que le premier tronçon de bague T1 jusqu'à un premier tronçon de bague T1 qui est plus resserré sur l'axe central (XX') que le second tronçon de bague T2.

Avantageusement, le tronçon intermédiaire T3 assure matériellement le décalage, aussi bien axialement que radialement, du premier tronçon T1 par rapport au second tronçon T2, et par conséquent la séparation des première et seconde zones d'interférence Z1, Z2.

A titre indicatif, et notamment pour une bague présentant des diamètres compris entre 70 mm et 100 mm, tel que cela a été décrit plus haut, la hauteur axiale H_{T3} du tronçon intermédiaire T3 pourra être sensiblement comprise entre 2 mm et 10 mm, tandis que la hauteur axiale H_{T1} du premier tronçon T1 pourra être sensiblement comprise entre 5 mm et 15 mm, et la hauteur axiale H_{T2} du second tronçon T2, qui pourra être éventuellement sensiblement égale à la hauteur axiale H_{T1} du premier tronçon, être sensiblement comprise entre 5 mm et 15 mm.

Selon une variante possible de réalisation, les hauteurs axiales H_{T1}, H_{T2}, HT3 respectives du premier tronçon, du second tronçon et du tronçon intermédiaire pourront être sensiblement égales : H_{T1} = H_{T2} = H_{T3}.

La hauteur axiale totale H3 de la bague 3 pourra quant à elle être sensiblement comprise entre 15 mm, voire 20 mm et 30 mm voire 40 mm, et de préférence sensiblement égale à 25 mm.

Les hauteurs axiales susmentionnées seront avantageusement choisies d'une part de manière à procurer une bonne assise axiale à la bague 3, et plus particulièrement à procurer une large étendue axiale aux zones d'interférences Z1, Z2, permettant d'offrir un effort de serrage (et un frottement) de la bague 3 sur chaque pièce 1, 2 qui soit élevé mais réparti sur une surface importante, de manière à limiter les contraintes dans les pièces 1, 2 en-deçà d'un seuil de contrainte admissible prédéterminé (typiquement en-deçà de la limite élastique Rp_{0,2} desdites pièces 1, 2), tout en conservant d'autre part à la bague 3 une bonne compacité axiale, afin de réduire l'encombrement de l'assemblage.

La transition spatiale opérée par le tronçon intermédiaire T3 est avantageusement progressive, ledit tronçon intermédiaire T3 présentant un agencement globalement incliné par rapport à l'axe central (XX'), de telle sorte qu'il converge progressivement vers l'axe central (XX'), pour créer un rétrécissement progressif aussi bien de la face interne 3I que de la face externe 3E de la bague 3, lorsque l'on parcourt ledit axe central (XX') depuis le second tronçon T2 vers le premier tronçon T1.

De préférence, tel que cela est bien visible sur les figures 3, 4 et 6 le tronçon intermédiaire T3 possède une section de profil, considérée en plan PL de coupe longitudinale contenant l'axe central (XX'), qui est sensiblement en forme de S aplati, et qui possède à cet effet une inclinaison plus importante par rapport à l'axe central (XX'), et donc une convergence plus rapide, dans sa partie axialement centrale T3C que dans ses portions axialement extrémales T3A, T3B, au niveau desquelles s'opèrent les jonctions avec le premier tronçon T1 et le second tronçon T2 respectivement.

Le premier tronçon T1 et le second tronçon T2 se raccordent de préférence de façon sensiblement tangente à l'extrémité axiale du tronçon intermédiaire T3A, T3B qui leur correspond.

On remarquera par ailleurs sur la section de profil de la bague 3 deux points particuliers, dits « points de rotulage » R1, R2.

Le premier point de rotulage R1, situé sur la face interne 3I de la bague 3, correspond à la jonction entre la première extrémité axiale T3A du tronçon intermédiaire T3 et le premier tronçon T1. C'est autour de ce premier point de rotulage R1 que s'opère la déformation en flexion du premier tronçon T1 (en éloignement radial, lors du montage), par rapport au tronçon intermédiaire T3, sous la contrainte de la première pièce 1 qui pénètre dans la bague 3.

Ledit premier point de rotulage R1 peut par ailleurs avantageusement correspondre au point de passage (et donc au rayon) de la première surface de jauge cylindrique C1.

Le second point de rotulage R2, situé sur la face externe 3E de la bague 3, correspond à la jonction entre la seconde extrémité axiale T3B du tronçon intermédiaire T3 et le second tronçon T2. C'est autour de ce second point de rotulage R2 que s'opère la déformation en flexion du second tronçon T2 (en rapprochement radial lors du montage), par rapport au tronçon intermédiaire T3, sous la contrainte de la seconde pièce 2.

Ledit second point de rotulage R2 peut par ailleurs avantageusement correspondre au point de passage (et donc au rayon) de la seconde surface de jauge cylindrique C2.

En pratique, par convention, le décalage radial total dR mentionné plus haut correspondra avantageusement à la distance radiale qui sépare le premier point de rotulage R1 du second point de rotulage R2 (et donc la première surface de jauge C1 de la seconde surface de jauge C2).

Au moins avant l'engagement de la bague 3 d'assemblage sur la première pièce 1, c'est-à-dire lorsque l'on considère la bague 3 initiale au repos, avant que l'on ne force le premier tronçon T1 à se déformer pour épouser la forme de la première pièce 1, tel que cela est illustré sur les figures 3 et 6, la face fonctionnelle du premier tronçon T1, ici la face radialement interne du premier tronçon de bague 3I_{T1}, destinée à recevoir la première pièce 1, présente une forme sensiblement tronconique qui converge vers l'axe central (XX') dans la direction opposée au second tronçon de bague T2 (c'est-à-dire que le sommet fictif, de préférence situé sur l'axe central (XX'), du tronc de cône formé par la face radialement interne du premier tronçon de bague 3I_{T1} se trouve en dehors de la plage axiale H3 couverte par la bague 3, et du côté du premier tronçon, c'est-à-dire plus proche axialement du premier tronçon que du second tronçon).

La face radialement interne du premier tronçon de bague 3I_{T1} converge ainsi vers l'axe central (XX'), en étant légèrement rabattue vers ledit axe central (XX'), selon un angle dit « angle de fermeture » θ1 qui est de préférence sensiblement compris entre 0,5 degré et 2 degrés, voire 4 degrés, et qui est préférentiellement sensiblement égal à 1 degré.

L'effort de serrage de la première pièce 1 peut avantageusement être ajusté par le choix de l'angle de fermeture θ1.

En effet, plus ledit angle de fermeture θ1 est élevé, c'est-à-dire plus l'inclinaison du premier tronçon T1 est forte et convergente par rapport à l'axe central (XX'), plus le serrage de la première pièce 1 sera important, et plus grande sera la capacité de la bague 3, et plus particulièrement du premier tronçon T1, à compenser les variations dimensionnelles dues aux changements de température.

A l'inverse, plus l'angle de fermeture θ1 sera faible, moins les contraintes exercées dans la pièce 1 (et dans la bague 3) seront élevées.

On notera que l'orientation du tronc de cône que forme la face radialement interne du premier tronçon de bague 3I_{T1}, c'est-à-dire ici une orientation convergente qui tend à rapprocher ladite face radialement interne 3I_{T1} de l'axe central (XX') au fur et à mesure que l'on descend axialement le long de la bague 3, de l'amont 3B vers l'aval 3A, depuis l'extrémité axiale supérieure formée par le second tronçon T2 jusqu'à la seconde extrémité axiale inférieure formée par le premier tronçon T1, est de préférence telle qu'elle coïncide avec le sens d'introduction F1 (ici du haut vers le bas sur les figures 1 et 4) dans lequel on introduit, lors du montage, la première pièce 1 dans la bague 3.

En d'autres termes, la face interne du premier tronçon de bague 3I_{T1}, et plus globalement la face interne 3I de la bague 3 dans son ensemble, forme à l'encontre de la première pièce 1, lors de l'introduction de ladite première pièce 1 dans ladite bague 3, une sorte d'entonnoir, dont la première pièce 1 va progressivement, au fur et à mesure de son enfoncement axial dans la bague 3, et plus particulièrement au fur et à mesure de son enfoncement axial dans le premier tronçon T1, forcer l'écartement radial (centrifuge) de la paroi, par effet de coin.

Cette forme en entonnoir facilite avantageusement le centrage et la pénétration de la première pièce 1 dans la bague 3, homogénéise la répartition des contraintes autour de l'axe central (XX'), et permet d'obtenir une déformation, notamment une déformation plastique, très progressive et relativement homogène de la bague 3, au fur et à mesure que l'on y enfonce la première pièce.

En outre un tel agencement tronconique améliore la capacité anti-retour de la bague 3, c'est-à-dire la capacité de la bague 3 à retenir la pièce 1 à l'encontre d'un effort d'extraction axiale qui tendrait à tirer la pièce 1 dans le sens opposé au sens d'introduction F1.

En outre, selon l'invention, la face radialement externe du premier tronçon 3E_{T1} suit également une convergence tronconique, selon le même angle de fermeture θ1.

Cette configuration externe en « pointe » peut notamment faciliter l'introduction et le centrage de la bague 3 dans la seconde pièce 2.

On notera par ailleurs que, bien qu'il ne soit pas exclu que la face radialement interne 3I_{T1} du premier tronçon T1 présente une forme tronconique légèrement incurvée, et notamment bombée vers l'extérieur, ladite face radialement interne 3I_{T1} du premier tronçon T1 suivra de préférence un tronc de cône rectiligne, généré par un segment de droite qui est incliné par rapport à l'axe central (XX') d'une valeur correspondant à l'angle de fermeture θ1.

Ledit segment de droite s'étendra de préférence du premier point de rotulage R1 susmentionné jusqu'à l'extrémité axiale libre (ici l'extrémité inférieure) du premier tronçon T1.

Pour des raisons analogues, on pourra également (ou alternativement) prévoir un agencement tronconique de la face fonctionnelle du second tronçon T2, et plus globalement du second tronçon T2 dans son ensemble.

Ainsi, selon l'invention, au moins avant l'engagement de la bague 3 d'assemblage sur la seconde pièce 2, c'est-à-dire lorsque l'on considère la bague 3 initiale au repos, avant que l'on ne force le second tronçon T2 à se déformer pour épouser la forme de la seconde pièce 2, tel que cela est illustré sur les figures 3 et 6, la face fonctionnelle du second tronçon T2, ici la face radialement externe 3E_{T2} du second tronçon de bague T2, destinée à recevoir la seconde pièce 2, présente une forme sensiblement tronconique qui diverge de l'axe central (XX') dans la direction opposée au premier tronçon de bague (T1), selon un angle dit « angle d'ouverture » θ2 qui est de préférence sensiblement compris entre 0,5 degré et 2 degrés, voire 4 degrés, et qui est préférentiellement sensiblement égal à 1 degré.

Ici encore, plus ledit angle d'ouverture θ2 est élevé, c'est-à-dire plus le second tronçon T2 s'évase le long de l'axe central (XX') en s'éloignant du premier tronçon T1, plus le serrage de la seconde pièce 2 sera important, et plus grande sera la capacité de la bague 3, et plus particulièrement la capacité du second tronçon T2, à compenser les variations dimensionnelles dues aux changements de température.

De préférence, le tronc de cône formé par la face radialement externe 3E_{T2} du second tronçon est, ici encore, rectiligne, et est généré en l'espèce par un segment de droite qui est issu du second point de rotulage R2 et orienté vers la seconde extrémité axiale (ici l'extrémité supérieure) de la bague 3.

De préférence, le sens de convergence du tronc de cône formé par la face radialement externe du second tronçon 3E_{T2} (la convergence vers l'axe central (XX') s'opérant ici en direction du premier tronçon) coïncidera avec le sens d'introduction F2 selon lequel on introduit la bague 3 dans la seconde pièce 2, ce qui permettra d'obtenir, comme précédemment, un effet d'auto-centrage, de répartition des contraintes de serrage, et d'augmentation progressive des contraintes de serrage au fur et à mesure de l'enfoncement axial de la bague 3 dans la seconde pièce 2.

De façon particulièrement préférentielle, le sens d'introduction F2 selon lequel on introduit (de préférence d'abord) la bague 3 dans la seconde pièce 2, et le sens d'introduction F1 dans lequel on introduit (de préférence ensuite) la première pièce 1 dans la bague 3 (de préférence préalablement positionnée dans la seconde pièce 2) sont identiques, l'assemblage s'effectuant ainsi avantageusement toujours dans le même sens (ici du haut vers le bas).

Concrètement, cela signifie que les deux troncs de cônes formés respectivement par le premier tronçon T1 et par le second tronçon T2 pointent dans la même direction (ici vers le bas).

Cette identité des sens d'introduction F1, F2 permet notamment de ne pas altérer, lors de l'insertion de la première pièce 1, le serrage déjà réalisé entre la bague 3 et la seconde pièce 2.

Par ailleurs, la face radialement interne du second tronçon 3I_{T2} suit également, de préférence, une convergence tronconique, orientée vers le premier tronçon T1, selon le même angle d'ouverture θ2 que la face radialement externe dudit second tronçon.

De la sorte, la face interne du second tronçon 3I_{T2} formera avantageusement un entonnoir qui permet de guider et de centrer, en amont du premier tronçon T1, la première pièce 1 lors de l'introduction de ladite première pièce 1 au sein de la bague 3.

Cet entonnoir « de guidage et de centrage » formé par le second tronçon T2 se prolonge ensuite axialement par l'entonnoir formé par l'étranglement du tronçon intermédiaire T3, puis par l'entonnoir « de serrage » formé par le premier tronçon T1.

On notera que, en définitive, la bague d'assemblage 3 présente de préférence une forme globale en entonnoir, de l'amont 3B vers l'aval 3A, la face interne 3I aussi bien que la face externe 3E de la bague 3 (c'est-à-dire plus globalement la paroi latérale de la bague 3) allant en se rétrécissant continûment, c'est-à-dire en se rapprochant continûment de l'axe central (XX'), au fur et à mesure que l'on parcourt axialement ladite bague 3, d'amont 3B en aval 3A, sur toute la hauteur axiale H3 de celle-ci.

Une telle conformation en entonnoir facilite et améliore non seulement les engagements successifs des pièces 1, 2 sur la bague 3 (et plus particulièrement l'engagement de la seconde pièce 2 autour de la bague 3 puis de la bague 3 autour de la première pièce 1, sur l'enveloppe externe de cette dernière), mais autorise également la fabrication de ladite bague 3 par emboutissage (voire par moulage), grâce aux angles de dépouille que créent les angles d'ouverture et de fermeture, ainsi que l'étranglement du tronçon intermédiaire T3.

De façon particulièrement préférentielle, la bague 3 est entièrement formée d'un seul tenant.

Ainsi, le second tronçon T2 est formé d'un seul tenant, avec le premier tronçon T1, et avec le tronçon intermédiaire T3, dans un même matériau.

De préférence, chacun des premier tronçon de bague T1 et second tronçon T2 de bague, et de préférence la bague d'assemblage 3 dans son ensemble, est formé(e) d'un seul tenant dans un matériau ductile qui présente un allongement à la rupture A% égal ou supérieur à 30 %, et de préférence égal ou supérieur à 38 %.

La bague 3 présentera ainsi une excellent capacité de déformation plastique, qui pourra être utile aussi bien pour sa fabrication par emboutissage que pour son serrage (le cas échéant son frettage) sans rupture sur les pièces 1, 2.

De même, le matériau sélectionné pour former la bague 3 (d'un seul tenant) présentera de préférence une limite d'élasticité à 0,2% (c'est-à-dire correspondant à 0,2% de déformation permanente) Rp_{0,2} égale ou supérieure à 140 MPa.

Préférentiellement, au moins le premier tronçon de bague T1, et de préférence la bague d'assemblage 3 dans son ensemble, est formée d'un seul tenant dans un matériau dont le coefficient de dilatation thermique est compris entre 80 % et 120 %, et de préférence entre 90 % et 110 %, voire entre 95 % et 105 % du coefficient de dilatation thermique du matériau constitutif de la première pièce.

Autrement dit, le matériau constitutif de la bague 3 sera de préférence choisi de telle sorte que son coefficient de dilatation thermique soit le plus proche possible (à moins de 20 %, moins de 10 %, voire moins de 5 % près) du coefficient de dilatation thermique de la première pièce 1, et plus généralement du coefficient de dilatation thermique le plus faible des deux pièces 1, 2.

Un tel choix permettra avantageusement à la bague de suivre spontanément, sans modifier significativement son serrage, les dilatations thermiques de la première pièce 1. On aura donc une plus grande liberté quant à la plage de tolérances dimensionnelles admissibles lors du montage initial de la bague 1 sur ladite pièce 1.

De préférence, la bague d'assemblage 3 est formée d'un seul tenant dans un matériau métallique, préférentiellement un acier.

Un tel matériau est en effet relativement bon marché, simple à mettre en forme, et présente les qualités de résistance et de ductilité recherchées.

On pourra en particulier utiliser un matériau de type feuillard non revêtu, laminé à froid, en acier doux pour formage à froid, plus particulièrement une nuance DC04 + LC suivant la norme NF EN 10139.

De préférence, tel que cela est illustré sur les figures 4 à 6, la bague d'assemblage 3 comporte, à son extrémité axiale libre située du côté du second tronçon T2, une collerette 11 en saillie radiale externe.

Ladite collerette 11 forme avantageusement un rebord radialement externe, qui suit le périmètre de la bague, de préférence circulaire, et qui s'étend sensiblement selon un plan normal à l'axe central (XX'), en saillie sur la face radialement externe 3E_{T2} du second tronçon T2, quasi-perpendiculairement à ladite face.

La collerette 11 peut avantageusement remplir (alternativement ou cumulativement) deux fonctions.

Tout d'abord une première fonction « anti-ovalisation » selon laquelle la collerette 11 rigidifie la bague 3, et empêche ainsi ladite bague (circulaire) d'être déformée ou écrasée radialement de façon hétérogène, et donc d'être ovalisée, notamment lors des manipulations qui surviennent avant le montage des pièces 1, 2, ou bien encore lors de la fabrication par emboutissage de la bague 3, lorsque ladite bague est réalisée par emboutissage d'un matériau anisotrope tel qu'un acier laminé.

Ensuite une seconde fonction de butée (axiale), selon laquelle la collerette 11 vient coopérer avec un épaulement 12 prévu sur la seconde pièce 2, et plus particulièrement dans le logement 4, épaulement 12 qui forme un rebord d'arrêt qui limite, de façon reproductible, précise et stable, la pénétration axiale de la bague 3 dans la seconde pièce 2, lors de l'introduction de la bague 3 dans la seconde pièce 2, puis lors de l'introduction de la première pièce 1 dans la bague 3.

De préférence, tel que cela est illustré sur la figure 7, la bague d'assemblage 3 est fabriquée d'un seul tenant par un procédé d'emboutissage, au cours duquel on emboutit un flan 13 de manière à former un brut d'emboutissage 14 cylindrique, dont l'axe correspond à l'axe central (XX') et dont la paroi latérale 15 possède la forme définitive de la bague d'assemblage 3.

De préférence, on procède ensuite à la découpe du fond 16 du brut d'emboutissage 14, de préférence par poinçonnage, selon le trait de découpe 20 illustré sur la figure 7, pour ne conserver que la portion de paroi latérale 15 du brut d'emboutissage qui correspond à la forme et aux dimensions de la bague d'assemblage 3 souhaitée.

Selon le cas, on pourra soit laisser la collerette 11, pour obtenir une bague selon les figures 4 à 6, soit retirer la partie supérieure du brut d'emboutissage 14 contenant la collerette 11, pour obtenir une bague à extrémité « droite » selon les figures 1 à 3.

Avantageusement, la paroi latérale 15 du brut d'emboutissage 14, et donc la paroi latérale de la bague 3, présentera une structure de dépouille qui va globalement en convergeant vers l'axe central, et qui comporte successivement, dans cet ordre le long de l'axe central (XX'), et imbriqués radialement de façon concentrique, la collerette 11 éventuelle, le second tronçon T2 large, le tronçon intermédiaire T3, puis le premier tronçon T1 étroit (auquel est initialement rattaché le fond 16).

Selon une option possible de mise en oeuvre, le procédé comprend une étape (d) de garnissage au cours de laquelle on interpose entre d'une part la face radialement externe 3E_{T1} du premier tronçon de bague T1 (c'est-à-dire sur la face opposée à celle contre laquelle appuie la première pièce 1) et d'autre part une portion de la seconde pièce 2 qui chevauche axialement ladite face radialement externe du premier tronçon, typiquement une portion de la paroi du logement 4, au moins un organe de dissipation thermique 17, du genre joint en pâte thermique, qui forme un pont thermique entre la bague d'assemblage 3 et la seconde pièce 2 pour favoriser l'évacuation de chaleur de la première pièce 1 vers la seconde pièce 2, et/ou au moins un organe amortisseur 18 en élastomère, du genre patin ou anneau (par exemple un joint torique), destiné à amortir la transmission de vibrations entre la première pièce 1 et la seconde pièce 2.

Tel que cela est illustré sur les figures 1 et 4, l'organe de dissipation thermique 17 et/ou de l'organe amortisseur 18 sera avantageusement situé dans le premier espace de dégagement 7, prévu par construction, ce qui permettra à l'assemblage de conserver sa compacité.

Bien entendu, l'organe de dissipation thermique 17 et/ou l'organe amortisseur 18 sera plus souple, et donc plus facilement déformable que la bague 3 et la seconde pièce 2, notamment par fluage sous compression radiale, de manière à ne pas constituer d'obstacle aux déformations, et notamment aux dilatations, de la bague 3 et de la seconde pièce 2.

L'organe de dissipation thermique 17 et/ou l'organe amortisseur 18 pourra notamment être accolé à la bague 3, sur la face externe 3E_{T1} du premier tronçon T1 avant que la bague 3 soit introduite dans le logement 4 de la seconde pièce 2 de manière à ce que l'organe de dissipation thermique 17 et/ou respectivement l'organe amortisseur 18 se retrouve comprimé radialement entre la bague 3 et la seconde pièce 2, en contact direct avec ces dernières.

Un exemple qui n'est pas couvert par les revendications concerne en tant que tel un sous-ensemble comprenant un carter 2, notamment un carter de direction, contenant un moteur 1, notamment un moteur d'assistance de direction, fixé audit carter 2 au moyen d'une bague d'assemblage 3 selon l'invention, de même qu'un dispositif de direction assistée comprenant un tel sous-ensemble, ainsi qu'un véhicule équipé d'un tel dispositif de direction assistée.

En particulier, un exemple qui n'est pas couvert par les revendications concerne un dispositif de direction assistée comprenant au moins un moteur d'assistance 1, qui présente de préférence une enveloppe en acier, ainsi qu'un carter de direction 2, de préférence en alliage d'aluminium ou en alliage de magnésium, qui est pourvu d'au moins un logement 4 dans lequel est fixé le moteur d'assistance 1, ledit dispositif de direction assistée étant caractérisé en ce que la fixation du moteur d'assistance 1 dans le logement 4 du carter de direction 2 est réalisée, de préférence exclusivement (car une seule bague d'assemblage 3 selon l'invention peut avantageusement suffire pour fixer de façon solide et stable la première pièce 1 à la seconde 2, et plus particulièrement un moteur 1 sur et dans un carter de direction 2), au moyen d'une bague d'assemblage 3 mise en oeuvre selon le procédé conforme à l'invention, selon l'une quelconque des variantes décrites dans ce qui précède.

Par ailleurs, un exemple qui n'est pas couvert par les revendications concerne en tant que telle une bague d'assemblage 3 selon l'une quelconque des formes de réalisation décrites dans ce qui précède, ainsi que l'utilisation d'une telle bague 3 pour fixer par serrage une première pièce, et notamment un moteur 1, sur une seconde pièce, et notamment un carter 2.

Bien entendu, l'invention est définie par les revendications et n'est pas limitée au seules variantes de réalisation mentionnées plus haut.

En particulier, la conformation de la bague d'assemblage 3 pourra faire l'objet de variantes pour s'adapter aux pièces 1, 2 à assembler.

De même, l'application du procédé d'assemblage pourra s'étendre à la fixation de moteurs dans des carters au sein de dispositifs autres que des directions assistées.

## Revendications

1. Procédé d'assemblage permettant de fixer une première pièce (1) à une seconde pièce (2), au cours duquel :
on interpose entre la première pièce (1) et la seconde pièce (2) une bague d'assemblage (3) cylindrique, d'axe central (XX'), qui présente une face radialement interne (3I) et une face radialement externe (3E),
on engage de force la face radialement interne (3I) de la bague d'assemblage sur la première pièce (1), de manière à créer entre la première pièce (1) et la bague (3) un contact de serrage dit « premier contact de serrage » qui solidarise la première pièce (1) et la bague (3), ledit premier contact de serrage occupant, sur la surface radialement interne de la bague (3I), une surface de contact totale dite « première zone d'interférence » (Z1),
et on engage de force la face radialement externe (3E) de la bague d'assemblage (3) sur la seconde pièce (2), de manière à créer entre la seconde pièce (2) et la bague (3) un contact de serrage dit « second contact de serrage » qui solidarise la seconde pièce et la bague, ledit second contact de serrage occupant, sur la surface radialement externe de la bague (3E), une surface de contact totale dite « seconde zone d'interférence » (Z2),
procédé dans lequel on utilise une bague d'assemblage (3) qui comporte un premier tronçon de bague (T1) cylindrique et un second tronçon de bague (T2) cylindrique qui sont étagés axialement l'un par rapport à l'autre, le long de l'axe central (XX'), et qui présentent des dimensions différentes l'un de l'autre, en section normale à l'axe central (XX'), de manière à confiner la première zone d'interférence (Z1) dans le premier tronçon de bague (T1) et, respectivement, la seconde zone d'interférence (Z2) dans le second tronçon de bague (T2), si bien que la première zone d'interférence et la seconde zone d'interférence ne présentent axialement pas de chevauchement l'une avec l'autre ledit procédé étant **caractérisé en ce que**, au moins avant l'engagement de la bague d'assemblage (3) sur la première pièce (1), la face radialement interne du premier tronçon de bague (3I_{T1}), destinée à recevoir la première pièce, présente une forme sensiblement tronconique qui converge vers l'axe central (XX') dans la direction opposée au second tronçon de bague (T2), selon un angle dit « angle de fermeture » (Θ1) qui est de préférence sensiblement compris entre 0,5 degré et 2 degrés, voire 4 degrés, et qui est préférentiellement sensiblement égal à 1 degré.

2. Procédé selon la revendication 1 **caractérisé en ce que** l'on force la déformation plastique de la bague d'assemblage (3) à l'encontre de la première pièce (1) dans la première zone d'interférence (Z1), respectivement à l'encontre de la seconde pièce (2) dans la seconde zone d'interférence (Z2).

3. Procédé selon la revendication 1 ou 2 **caractérisé en ce que** la bague d'assemblage (3) présente une forme de révolution autour de l'axe central (XX') et/ou **en ce que** la bague d'assemblage (3) forme un anneau fermé présentant une continuité de matière tout autour de l'axe central (XX').

4. Procédé selon l'une des revendications précédentes **caractérisé en ce que** le premier tronçon de bague (T1) est plus resserré sur l'axe central (XX') que le second tronçon de bague (T2), de telle sorte que la face radialement interne (3I_{T1}) dudit premier tronçon de bague (T1) est plus proche radialement de l'axe central (XX') que la face radialement interne (3I_{T2}) du second tronçon de bague (T2) et, respectivement, la face radialement externe (3E_{T1}) du premier tronçon de bague (T1) est plus proche radialement de l'axe central (XX') que la face radialement externe (3E_{T2}) du second tronçon de bague (T2).

5. Procédé selon l'une des revendications précédentes **caractérisé en ce que** le premier tronçon de bague (T1) forme une première extrémité axiale de la bague (3), et/ou **en ce que** le second tronçon de bague (T2) forme une seconde extrémité axiale de la bague (3), opposée à la première extrémité axiale.

6. Procédé selon l'une des revendications précédentes **caractérisé en ce que** le premier tronçon de bague (T1) et le second tronçon de bague (T2) sont reliés directement l'un à l'autre par un tronçon de bague intermédiaire (T3) cylindrique interposé axialement entre lesdits premier et second tronçons de bague, et qui forme, par rapport à l'axe central (XX'), un étranglement (10) qui assure une transition depuis un second tronçon de bague (T2) qui est plus large que le premier tronçon de bague jusqu'à un premier tronçon de bague (T1) qui est plus resserré sur l'axe central (XX') que le second tronçon de bague.

7. Procédé selon l'une des revendications précédentes **caractérisé en ce que**, au moins avant l'engagement de la bague d'assemblage (3) sur la seconde pièce (2), la face radialement externe du second tronçon de bague (3E_{T2}), destinée à recevoir la seconde pièce (2), présente une forme sensiblement tronconique qui diverge de l'axe central (XX') dans la direction opposée au premier tronçon de bague (T1), de préférence selon un angle dit « angle d'ouverture » (Θ2) qui est sensiblement compris entre 0,5 degré et 2 degrés, voire 4 degrés, et qui est préférentiellement sensiblement égal à 1 degré.

8. Procédé selon l'une des revendications précédentes **caractérisé en ce que** chacun des premier tronçon de bague (T1) et second tronçon de bague (T2), et de préférence la bague d'assemblage (3) dans son ensemble, est formé(e) d'un seul tenant dans un matériau ductile présentant un allongement à la rupture (A%) égal ou supérieur à 38 %.

9. Procédé selon l'une des revendications précédentes **caractérisé en ce que** au moins le premier tronçon de bague (T1), et de préférence la bague d'assemblage (3) dans son ensemble, est formée d'un seul tenant dans un matériau dont le coefficient de dilatation thermique est compris entre 80% et 120%, et de préférence entre 90 % et 110 % du coefficient de dilatation thermique du matériau constitutif de la première pièce (1).

10. Procédé selon l'une des revendications précédentes **caractérisé en ce que** la bague d'assemblage (3) est formée d'un seul tenant dans un matériau métallique, de préférence un acier.

11. Procédé selon l'une des revendications précédentes **caractérisé en ce que** la bague d'assemblage (3) comporte, à son extrémité axiale libre située du côté du second tronçon (T2), une collerette (11) en saillie radiale externe.

12. Procédé selon l'une des revendications précédentes **caractérisé en ce que** la bague d'assemblage (3) est fabriquée d'un seul tenant par un procédé d'emboutissage, au cours duquel on emboutit un flan (13) de manière à former un brut d'emboutissage (14) cylindrique, dont l'axe correspond à l'axe central (XX') et dont la paroi latérale (15) possède la forme définitive de la bague d'assemblage, puis l'on procède à la découpe du fond (16) du brut d'emboutissage (14) pour ne conserver que la portion de paroi latérale (15) du brut d'emboutissage qui correspond à la forme et aux dimensions de la bague d'assemblage (3) souhaitée.

13. Procédé selon l'une des revendications précédentes **caractérisé en ce qu'**il comprend une étape (d) de garnissage au cours de laquelle on interpose entre d'une part la face radialement externe (3E_{T1}) du premier tronçon de bague (T1) et d'autre part une portion de la seconde pièce (2) qui chevauche axialement ladite face radialement externe du premier tronçon, au moins un organe de dissipation thermique (17), du genre joint en pâte thermique, qui forme un pont thermique entre la bague d'assemblage (3) et la seconde pièce (2) pour favoriser l'évacuation de chaleur de la première pièce (1) vers la seconde pièce (2), et/ou au moins un organe amortisseur (18) en élastomère, du genre patin ou anneau, destiné à amortir la transmission de vibrations entre la première pièce (1) et la seconde pièce (2).

## Patentansprüche

1. Verbindungsverfahren, das es ermöglicht, ein erstes Teil (1) an einem zweiten Teil (2) zu befestigen, in dessen Verlauf:
zwischen dem ersten Teil (1) und dem zweiten Teil (2) ein zylindrischer Verbindungsring (3) mit einer Mittelachse (XX') eingefügt wird, der eine radial innere Fläche (31) und eine radial äußere Fläche (3E) aufweist,
die radial innere Fläche (31) des Verbindungsrings unter Kraft an dem ersten Teil (1) in Eingriff gebracht wird, um zwischen dem ersten Teil (1) und dem Ring (3) einen als "erster Spannkontakt" bezeichneten Spannkontakt zu erzeugen, der das erste Teil (1) und den Ring (3) fest miteinander verbindet, wobei der erste Spannkontakt an der radial inneren Fläche des Rings (3I) eine als "erste Interferenzzone" (Z1) bezeichnete Gesamtkontaktfläche einnimmt,
und die radial äußere Fläche (3E) des Verbindungsrings (3) unter Kraft an dem zweiten Teil (2) in Eingriff gebracht wird, um zwischen dem zweiten Teil (2) und dem Ring (3) einen als "zweiter Spannkontakt" bezeichneten Spannkontakt zu erzeugen, der das zweite Teil und den Ring fest miteinander verbindet, wobei der zweite Spannkontakt an der radial äußeren Fläche des Rings (3E) eine als "zweite Interferenzzone" (Z2) bezeichnete Gesamtkontaktfläche einnimmt,
wobei ein Verbindungsring (3) verwendet wird, der ein erstes zylindrisches Ringteilstück (T1) und ein zweites zylindrisches Ringteilstück (T2) umfasst, die axial zueinander entlang der Mittelachse (XX') abgestuft sind und die im Querschnitt normal zur Mittelachse (XX') voneinander unterschiedliche Abmessungen aufweisen, um die erste Interferenzzone (Z1) in dem ersten Ringteilstück (T1) bzw. die zweite Interferenzzone (Z2) in dem zweiten Ringteilstück (T2) einzuschränken, sodass die erste Interferenzzone und die zweite Interferenzzone axial keine Überlappung miteinander aufweisen, wobei das Verfahren **dadurch gekennzeichnet ist, dass** mindestens vor dem Eingreifen des Verbindungsrings (3) an dem ersten Teil (1) die radial innere Fläche des ersten Ringteilstücks (3I_{T1}), die dazu bestimmt ist, das erste Teil aufzunehmen, eine im Wesentlichen kegelstumpfförmige Form aufweist, die in der dem zweiten Ringteilstück (T2) entgegengesetzten Richtung in einem als "Schließwinkel" (θ1) bezeichneten Winkel, der vorzugsweise im Wesentlichen im Bereich zwischen 0,5 Grad und 2 Grad, ja sogar 4 Grad, liegt und der bevorzugt im Wesentlichen gleich 1 Grad beträgt, zur Mittelachse (XX') konvergiert.

2. Verfahren nach Anspruch 1, **dadurch gekennzeichnet, dass** die plastische Verformung des Verbindungsrings (3) gegenüber dem ersten Teil (1) in der ersten Interferenzzone (Z1) bzw. gegenüber dem zweiten Teil (2) in der zweiten Interferenzzone (Z2) erzwungen wird.

3. Verfahren nach Anspruch 1 oder 2, **dadurch gekennzeichnet, dass** der Verbindungsring (3) eine rotationssymmetrische Form um die Mittelachse (XX') aufweist und/oder dadurch, dass der Verbindungsring (3) eine geschlossene Öse bildet, die um die ganze Mittelachse (XX') herum eine Materialkontinuität aufweist.

4. Verfahren nach einem der vorstehenden Ansprüche, **dadurch gekennzeichnet, dass** das erste Ringteilstück (T1) an der Mittelachse (XX') enger ist als das zweite Ringteilstück (T2), sodass die radial innere Fläche (3I_{T1}) des ersten Ringteilstücks (T1) radial näher an der Mittelachse (XX') liegt als die radial innere Fläche (3I_{T2}) des zweiten Ringteilstücks (T2), bzw. die radial äußere Fläche (3E_{T1}) des ersten Ringteilstücks (T1) radial näher an der Mittelachse (XX') liegt als die radial äußere Fläche (3E_{T2}) des zweiten Ringteilstücks (T2).

5. Verfahren nach einem der vorstehenden Ansprüche, **dadurch gekennzeichnet, dass** das erste Ringteilstück (T1) ein erstes axiales Ende des Rings (3) bildet, und/oder dadurch, dass das zweite Ringteilstück (T2) ein zweites axiales Ende des Rings (3) bildet, das dem ersten axialen Ende gegenüberliegt.

6. Verfahren nach einem der vorstehenden Ansprüche, **dadurch gekennzeichnet, dass** das erste Ringteilstück (T1) und das zweite Ringteilstück (T2) durch ein zylindrisches Zwischen-Ringteilstück (T3), das axial zwischen dem ersten und dem zweiten Ringteilstück eingefügt ist, und das in Bezug auf die Mittelachse (XX') eine Einschnürung (10) bildet, die einen Übergang von einem zweiten Ringteilstück (T2), das breiter ist als das erste Ringteilstück, zu einem ersten Ringteilstück (T1), das an der Mittelachse (XX') enger ist als der zweite Ringteilstück, sicherstellt, direkt miteinander verbunden sind.

7. Verfahren nach einem der vorstehenden Ansprüche, **dadurch gekennzeichnet, dass** mindestens vor dem Eingreifen des Verbindungsrings (3) an dem zweiten Teil (2) die radial äußere Fläche des zweiten Ringteilstücks (3E_{T2}), die dazu bestimmt ist, das zweite Teil (2) aufzunehmen, eine im Wesentlichen kegelstumpfförmige Form aufweist, die in der dem ersten Ringteilstück (T1) entgegengesetzten Richtung vorzugsweise in einem als "Öffnungswinkel" (θ2) bezeichneten Winkel, der im Wesentlichen im Bereich zwischen 0,5 Grad und 2 Grad, ja sogar 4 Grad, liegt und der bevorzugt im Wesentlichen gleich 1 Grad beträgt, von der Mittelachse (XX') divergiert.

8. Verfahren nach einem der vorstehenden Ansprüche, **dadurch gekennzeichnet, dass** jedes von dem ersten Ringteilstück (T1) und dem zweiten Ringteilstück (T2), und vorzugsweise der Verbindungsring (3) in seiner Gesamtheit einstückig aus einem duktilen Material gebildet ist, das eine Bruchdehnung (A%) von gleich oder größer als 38 % aufweist.

9. Verfahren nach einem der vorstehenden Ansprüche, **dadurch gekennzeichnet, dass** mindestens das erste Ringteilstück (T1), und vorzugsweise der Verbindungsring (3) in seiner Gesamtheit einstückig aus einem Material gebildet ist, dessen Wärmeausdehnungskoeffizient im Bereich zwischen 80 % und 120 %, und vorzugsweise zwischen 90 % und 110 % des Wärmeausdehnungskoeffizienten des Materials liegt, aus dem das erste Teil (1) besteht.

10. Verfahren nach einem der vorstehenden Ansprüche, **dadurch gekennzeichnet, dass** der Verbindungsring (3) einstückig aus einem metallischen Material, vorzugsweise aus Stahl, gebildet ist.

11. Verfahren nach einem der vorstehenden Ansprüche, **dadurch gekennzeichnet, dass** der Verbindungsring (3) an seinem freien axialen Ende, das sich auf der Seite des zweiten Teilstücks (T2) befindet, einen radial nach außen vorspringenden Flansch (11) umfasst.

12. Verfahren nach einem der vorstehenden Ansprüche, **dadurch gekennzeichnet, dass** der Verbindungsring (3) einstückig durch ein Tiefziehverfahren hergestellt wird, in dessen Verlauf ein Zuschnitt (13) tiefgezogen wird, um einen zylindrischen Tiefziehrohling (14) zu bilden, dessen Achse der Mittelachse (XX') entspricht und dessen Seitenwand (15) die endgültige Form des Verbindungsrings besitzt, anschließend das Schneiden des Bodens (16) des Tiefziehrohlings (14) vorgenommen wird, um nur den Abschnitt der Seitenwand (15) des Tiefziehrohlings zu behalten, der der Form und den Abmessungen des gewünschten Verbindungsrings (3) entspricht.

13. Verfahren nach einem der vorstehenden Ansprüche, **dadurch gekennzeichnet, dass** es einen Schritt (d) des Auskleidens umfasst, in dessen Verlauf zwischen einerseits der radial äußeren Fläche (3E_{T1}) des ersten Ringteilstücks (T1) und andererseits einem Abschnitt des zweiten Teils (2), der die radial äußere Fläche des ersten Teilstücks axial überlappt, mindestens ein Wärmeableitungsorgan (17) von der Art einer Dichtung aus Wärmeleitpaste, das eine Wärmebrücke zwischen dem Verbindungsring (3) und dem zweiten Teil (2) bildet, um die Abfuhr von Wärme vom ersten Teil (1) zum zweiten Teil (2) zu unterstützen, und/oder mindestens ein Dämpfungsorgan (18) aus Elastomer von der Art einer Kufe oder einer Öse eingefügt wird, das dazu bestimmt ist, die Übertragung von Schwingungen zwischen dem ersten Teil (1) und dem zweiten Teil (2) zu dämpfen.

## Claims

1. An assembly method allowing fastening a first part (1) to a second part (2), during which:
there is interposed between the first part (1) and the second part (2) a cylindrical assembly ring (3) with a central axis (XX'), which has a radially inner face (31) and a radially outer face (3E),
there is forcibly engaged the radially inner face (31) of the assembly ring on the first part (1), so as to create between the first part (1) and the ring (3) a clamping contact called «first clamping contact» which secures the first part (1) and the ring (3), said first clamping contact occupying a total contact surface called «first interference area» (Z1), on the radially inner surface of the ring (3I),
and there is forcibly engaged the radially outer face (3E) of the assembly ring (3) on the second part (2), so as to create between the second part (2) and the ring (3) a clamping contact called «second clamping contact» which secures the second part and the ring, said second clamping contact occupying a total contact surface called «second interference area» (Z2) on the radially outer surface of the ring (3E),
said method being **characterized in that** there is used an assembly ring (3) which includes a first cylindrical ring segment (T1) and a second cylindrical ring segment (T2) which are axially stepped relative to one another, along the central axis (XX'), and which have dimensions different from each other, in a section normal to the central axis (XX'), so as to confine the first interference area (Z1) in the first ring segment (T1) and, respectively, the second interference area (Z2) in the second ring segment (T2), so that the first interference area and the second interference area do not axially overlap with each other, and wherein, at least before the engagement of the assembly ring (3) on the first part (1), the radially inner face of the first ring segment (3I_{T1}), intended to receive the first part, has a substantially frusto-conical shape which converges towards the central axis (XX') in the direction opposite to the second ring segment (T2), according to an angle called «closing angle», (θ1) which is preferably substantially comprised between 0.5 degrees and 2 degrees, or even 4 degrees, and which is preferably substantially equal to 1 degree.

2. The method according to claim 1, **characterized in that** the plastic deformation of the assembly ring (3) is forced against the first part (1) in the first interference area (Z1), respectively against the second part (2) in the second interference area (Z2).

3. The method according to claim 1 or 2, **characterized in that** the assembly ring (3) has an axisymmetric shape about the central axis (XX') and/or **in that** the assembly ring (3) forms a closed annulus having a continuity of material all about the central axis (XX').

4. The method according to any of the preceding claims, **characterized in that** the first ring segment (T1) is more tightened on the central axis (XX') than the second ring segment (T2), so that the radially inner face (3I_{T1}) of said first ring segment (T1) is radially closer to the central axis (XX') than the radially inner face (3I_{T2}) of the second ring segment (T2) and, respectively, the radially outer face (3E_{T1}) of the first ring segment (T1) is radially closer to the central axis (XX') than the radially outer face (3E_{T2}) of the second ring segment (T2).

5. The method according to any of the preceding claims, **characterized in that** the first ring segment (T1) forms a first axial end of the ring (3), and/or **in that** the second ring segment (T2) forms a second axial end of the ring (3), opposite the first axial end.

6. The method according to any of the preceding claims, **characterized in that** the first ring segment (T1) and the second ring segment (T2) are linked directly to one another by a cylindrical intermediate ring segment (T3) interposed axially between said first and second ring segments, and which forms, relative to the central axis (XX'), a throttle (10) which ensures a transition from a second ring segment (T2) which is wider than the first ring segment to a first ring segment (T1) which is more tightened on the central axis (XX') than the second ring segment.

7. The method according to any of the preceding claims, **characterized in that**, at least before the engagement of the assembly ring (3) on the second part (2), the radially outer face of the second ring segment (3E_{T2}), intended to receive the second part (2), has a substantially frusto-conical shape which diverges from the central axis (XX') in the direction opposite to the first ring segment (T1), preferably according to an angle called «opening angle» (θ2) which is substantially comprised between 0.5 degrees and 2 degrees, even 4 degrees, and which is preferably substantially equal to 1 degree.

8. The method according to any of the preceding claims, **characterized in that** each of the first ring segment (T1) and second ring segment (T2), and preferably the assembly ring (3) as a whole, is integrally formed in a ductile material having an elongation at rupture (A%) equal to or greater than 38%.

9. The method according to any of the preceding claims, **characterized in that** at least the first ring segment (T1), and preferably the assembly ring (3) as a whole, is integrally formed in a material whose coefficient of thermal expansion is comprised between 80% and 120% and preferably between 90% and 110% of the coefficient of thermal expansion of the material constituting the first part (1).

10. The method according to any of the preceding claims, **characterized in that** the assembly ring (3) is integrally formed of a metallic material, preferably a steel.

11. The method according to any of the preceding claims, **characterized in that** the assembly ring (3) includes, at its free axial end situated on the side of the second segment (T2), a collar (11) projecting radially outwards.

12. The method according to any of the preceding claims, **characterized in that** the assembly ring (3) is integrally manufactured by a stamping method, during which a blank (13) is stamped so as to form a cylindrical stamping crude (14) whose axis corresponds to the central axis (XX') and whose side wall (15) has the final shape of the assembly ring, then the bottom (16) of the stamping crude (14) is cut to preserve only the side wall portion (15) of the stamping crude which corresponds to the shape and dimensions of the desired assembly ring (3).

13. The method according to any of the preceding claims, **characterized in that** it comprises a packing step (d) during which there is interposed between, on the one hand, the radially outer face (3E_{T1}) of the first ring segment (T1) and, on the other hand, a portion of the second part (2) which axially overlaps said radially outer face of the first segment, at least one thermal dissipation member (17), of the thermal paste joint type, which forms a thermal bridge between the assembly ring (3) and the second part (2) to promote the evacuation of heat from the first part (1) to the second part (2), and/or at least one damping member (18) made of an elastomer, of the kind pad or annulus, intended to damp the transmission of vibrations between the first part (1) and the second part (2).
